# EUROPEAN PATENT APPLICATION

(11) **EP 4 793 773 A1**
(43) Date of publication of application: **19.08.2026**
(21) Application number: 24917350.1
(22) Date of filing: 10.01.2024
(51) Int. Cl.: G06F 9/54, G06F 9/4401, G06F 9/455, G06F 11/14, G06F 15/173, B60K 35/29, H04L 12/40

(54) **SIGNAL PROCESSING DEVICE AND VEHICLE DISPLAY DEVICE COMPRISING SAME**

(71) Applicant: LG Electronics Inc., Yeongdeungpo-gu Seoul 07336 (KR)
(72) Inventor: KIM, Hyunkyu, Seoul 06772 (KR); LEE, Eunkoo, Seoul 06772 (KR); KIM, Youngtae, Seoul 06772 (KR); LEE, Dongkyu, Seoul 06772 (KR); LEE, Chulhee, Seoul 06772 (KR)
(74) Representative: Vossius & Partner Patentanwälte Rechtsanwälte mbB
(86) International application number: PCT/KR2024/000483
(87) International publication number: WO 2025/150584

(57) **Abstract**

A signal processing device and a vehicle display apparatus including the same according to an embodiment of the present disclosure include a processor configured to execute an operating system, wherein the processor is configured to execute Vehicle Signal Specification (VSS)-based middleware on the operating system, execute an application on the VSS-based middleware, and, based on a VSS-based message interface during communication with an adjacent second signal processing device, receive or transmit a message to a second VSS-based message interface in the second signal processing device. Accordingly, it is possible to perform high-speed and stable communication between the plurality of signal processing devices.

## Description

### BACKGROUND

### 1. Technical Field

The present disclosure relates to a signal processing device and a vehicle display apparatus including the same, and more particularly to a signal processing device capable of performing high-speed and stable communication between a plurality of signal processing devices, and a vehicle display apparatus including the signal processing device.

### 2. Description of the Related Art

A vehicle is a machine that allows a user to move in a desired direction. A typical example of the vehicle is an automobile.

Meanwhile, a signal processing device for vehicles is mounted in the vehicle for convenience of users who use the vehicle.

The signal processing device in the vehicle receives sensor data from various vehicle internal sensor devices and processes the sensor data.

Meanwhile, as the type and number of sensors mounted in the vehicle increase for the Advanced Driver Assistance System (ADAS) or autonomous driving, etc., the amount of data required to be processed also increases.

In addition, as the number of displays mounted in a vehicle increases, data required to be processed by a signal processing device that controls the displays also increases.

### SUMMARY

It is an objective of the present disclosure to provide a signal processing device capable of performing high-speed and stable communication between a plurality of signal processing devices, and a vehicle display apparatus including the signal processing device.

It is another objective of the present disclosure to provide a signal processing device capable of performing high-speed and stable communication between a plurality of signal processing devices using different operating systems, and a vehicle display apparatus including the signal processing device.

It is yet another objective of the present disclosure to provide a signal processing device capable of performing stable communication even in response to a network error occurring, and a vehicle display apparatus including the signal processing device.

In accordance with an aspect of the present disclosure, the above and other objectives can be accomplished by providing a signal processing device and a vehicle display apparatus including the same, the signal processing device including a processor configured to execute an operating system, wherein the processor is configured to execute Vehicle Signal Specification (VSS)-based middleware on the operating system, execute an application on the VSS-based middleware, and, based on a VSS-based message interface during communication with an adjacent second signal processing device, receive or transmit a message to a second VSS-based message interface in the second signal processing device.

Meanwhile, during communication with the second signal processing device configured to execute a different operating system from the signal processing device, the processor can be configured to receive or transmit a message based on the VSS-based message interface.

Meanwhile, the processor can be configured to execute an application for a display or an application for vehicle driving assistance on the VSS-based middleware.

Meanwhile, the processor can be configured to execute a Data Distribution Service (DDS) or Scalable service-Oriented MiddlewarE over IP (SOME/IP) on the operating system.

Meanwhile, in response to a network error occurring between the signal processing device and the second signal processing device, the processor can be configured to receive or transmit a message to the second signal processing device via an adjacent third signal processing device.

Meanwhile, in response to a network error occurring between the signal processing device and the second signal processing device, the processor can be configured to receive or transmit a message to the second signal processing device via the third signal processing device based on the VSS-based message interface.

Meanwhile, the processor can be configured to receive or transmit data between the VSS-based middleware and the application via a data distribution service (DDS) domain.

Meanwhile, the processor can be configured transform data of an application, downloaded from an external server, and transmit the data to the VSS-based middleware or to the second signal processing device via the DDS domain.

Meanwhile, the processor can be configured to transmit data, received from the second signal processing device, to the VSS-based middleware or to the external server or another signal processing device, via the DDS domain.

Meanwhile, the processor can be configured to transform a CAN message, received from the second signal processing device, into a VSS-based message and transmit the transformed VSS-based message to a display.

Meanwhile, in response to a sensor setting being changed through a display, the processor can be configured to transform received sensor setting change data into a VSS-based message, transform the transformed VSS-based message into a CAN message, and transmit the transformed CAN message to the second signal processing device.

Meanwhile, in response to data received from the external server not being mapped to the DDS domain, the processor can be configured to operate after mapping the data by searching for a meaning of a vehicle signal of the received data.

Meanwhile, the processor can be configured to receive vehicle function data provided based on a sample signal received from a new device in response to the new device being connected, and to execute a service based on the received vehicle function data or transmit the data to the adjacent second signal processing device.

Meanwhile, in response to a new device being connected or mounted, the processor can be configured to receive location information, path information, manufacturer information, and code information of the new device, and to transmit the manufacturer information and the code information to the external server.

Meanwhile, the processor can be configured to receive a container or application, corresponding to the new device, from the server, and to execute the container or the application or transmit the container or the application to the second signal processing device.

Meanwhile, in response to a network connection being established with a new device, the processor can be configured to receive network information, manufacturer information, and code information of the new device, and to transmit the manufacturer information and the code information to the external server.

In accordance with another aspect of the present disclosure, the above and other objectives can be accomplished by providing a signal processing device and a vehicle display apparatus including the same, the signal processing device including a processor configured to execute an operating system, wherein the processor is configured to execute VSS-based middleware on the operating system and execute an application on the VSS-based middleware, transform data of an application, downloaded from an external server, and transmit the data to the VSS-based middleware or to an adjacent second signal processing device via a DDS domain.

Meanwhile, the processor can be configured to transmit data, received from the second signal processing device, to the VSS-based middleware or to the external server or another signal processing device, via the DDS domain.

Meanwhile, the processor can be configured to transform a CAN message, received from the second signal processing device, into a VSS-based message and transmit the transformed VSS-based message to a display.

### EFFECTS OF THE DISCLOSURE

A signal processing device and a vehicle display apparatus including the same according to an embodiment of the present disclosure include a processor configured to execute an operating system, wherein the processor is configured to execute Vehicle Signal Specification (VSS)-based middleware on the operating system, execute an application on the VSS-based middleware, and, based on a VSS-based message interface during communication with an adjacent second signal processing device, receive or transmit a message to a second VSS-based message interface in the second signal processing device. Accordingly, it is possible to perform high-speed and stable communication between the plurality of signal processing devices.

Meanwhile, during communication with the second signal processing device configured to execute a different operating system from the signal processing device, the processor can be configured to receive or transmit a message based on the VSS-based message interface. Accordingly, it is possible to perform high-speed and stable communication between the plurality of signal processing devices using different operating systems.

Meanwhile, the processor can be configured to execute an application for a display or an application for vehicle driving assistance on the VSS-based middleware. Accordingly, applications can be stably executed.

Meanwhile, the processor can be configured to execute a Data Distribution Service (DDS) or Scalable service-Oriented MiddlewarE over IP (SOME/IP) on the operating system, thereby ensuring high computing performance in data processing.

Meanwhile, in response to a network error occurring between the signal processing device and the second signal processing device, the processor can be configured to receive or transmit a message to the second signal processing device via an adjacent third signal processing device. Accordingly, stable communication can be performed even in response to a network error occurring.

Meanwhile, in response to a network error occurring between the signal processing device and the second signal processing device, the processor can be configured to receive or transmit a message to the second signal processing device via the third signal processing device based on the VSS-based message interface. Accordingly, stable communication can be performed even in response to a network error occurring.

Meanwhile, the processor can be configured to receive or transmit data between the VSS-based middleware and the application via a data distribution service (DDS) domain. Accordingly, data can be rapidly received or transmitted.

Meanwhile, the processor can be configured transform data of an application, downloaded from an external server, and transmit the data to the VSS-based middleware or to the second signal processing device via the DDS domain. Accordingly, it is possible to perform high-speed and stable communication between the plurality of signal processing devices.

Meanwhile, the processor can be configured to transmit data, received from the second signal processing device, to the VSS-based middleware or to the external server or another signal processing device, via the DDS domain. Accordingly, it is possible to perform high-speed and stable communication between the plurality of signal processing devices.

Meanwhile, the processor can be configured to transform a CAN message, received from the second signal processing device, into a VSS-based message and transmit the transformed VSS-based message to a display. Accordingly, it is possible to perform high-speed and stable communication between the plurality of signal processing devices.

Meanwhile, in response to a sensor setting being changed through a display, the processor can be configured to transform received sensor setting change data into a VSS-based message, transform the transformed VSS-based message into a CAN message, and transmit the transformed CAN message to the second signal processing device. Accordingly, it is possible to perform high-speed and stable communication between the plurality of signal processing devices.

Meanwhile, in response to data received from the external server not being mapped to the DDS domain, the processor can be configured to operate after mapping the data by searching for a meaning of a vehicle signal of the received data. Accordingly, stable communication can be performed.

Meanwhile, the processor can be configured to receive vehicle function data provided based on a sample signal received from a new device in response to the new device being connected, and to execute a service based on the received vehicle function data or transmit the data to the adjacent second signal processing device. Accordingly, it is possible to perform high-speed and stable communication between the plurality of signal processing devices.

Meanwhile, in response to a new device being connected or mounted, the processor can be configured to receive location information, path information, manufacturer information, and code information of the new device, and to transmit the manufacturer information and the code information to the external server. Accordingly, information about the new device can be transmitted to the server.

Meanwhile, the processor can be configured to receive a container or application, corresponding to the new device, from the server, and to execute the container or the application or transmit the container or the application to the second signal processing device. Accordingly, the container or application, associated with the new device, can be stably executed or transmitted.

Meanwhile, in response to a network connection being established with a new device, the processor can be configured to receive network information, manufacturer information, and code information of the new device, and to transmit the manufacturer information and the code information to the external server. Accordingly, information about the new device can be transmitted to the server.

A signal processing device and a vehicle display apparatus including the same according to another embodiment of the present disclosure include a processor configured to execute an operating system, wherein the processor is configured to execute VSS-based middleware on the operating system and execute an application on the VSS-based middleware, transform data of an application, downloaded from an external server, and transmit the data to the VSS-based middleware or to an adjacent second signal processing device via a DDS domain. Accordingly, it is possible to perform high-speed and stable communication between the plurality of signal processing devices.

Meanwhile, the processor can be configured to transmit data, received from the second signal processing device, to the VSS-based middleware or to the external server or another signal processing device, via the DDS domain. Accordingly, it is possible to perform high-speed and stable communication between the plurality of signal processing devices.

Meanwhile, the processor can be configured to transform a CAN message, received from the second signal processing device, into a VSS-based message and transmit the transformed VSS-based message to a display. Accordingly, it is possible to perform high-speed and stable communication between the plurality of signal processing devices.

### BRIEF DESCRIPTION OF THE DRAWINGS

FIG. 1 is a diagram illustrating an example of the exterior and interior of a vehicle;
FIGS. 2 to 2C are diagrams illustrating various architectures of a vehicle communication gateway;
FIG. 3A is a diagram illustrating an example of a vehicle display apparatus in a vehicle;
FIG. 3B is a diagram illustrating another example of a vehicle display apparatus in a vehicle;
FIG. 4 is an internal block diagram illustrating an example of the vehicle display apparatus of FIG. 3B;
FIGS. 5A to 5D are diagrams illustrating various examples of a vehicle display apparatus;
FIG. 6 is a block diagram illustrating an example of a vehicle display apparatus according to an embodiment of the present disclosure;
FIG. 7 is a block diagram illustrating another example of a vehicle display apparatus according to an embodiment of the present disclosure; and
FIGS. 8A to 18B are diagrams referred to in the description of FIG. 6 or FIG. 7.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

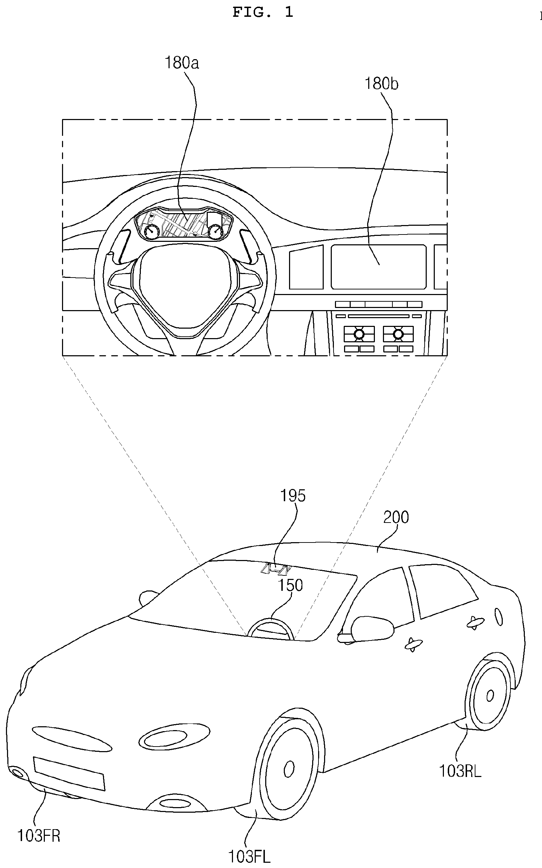

FIG. 1 is a diagram illustrating an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) can also be used.

Meanwhile, the audio video navigation (AVN) display 180b can also be called a center information display.

Meanwhile, the vehicle 200 described in this specification can be a concept including all of a vehicle having an engine as a power source, a hybrid vehicle having an engine and an electric motor as a power source, and an electric vehicle having an electric motor as a power source.

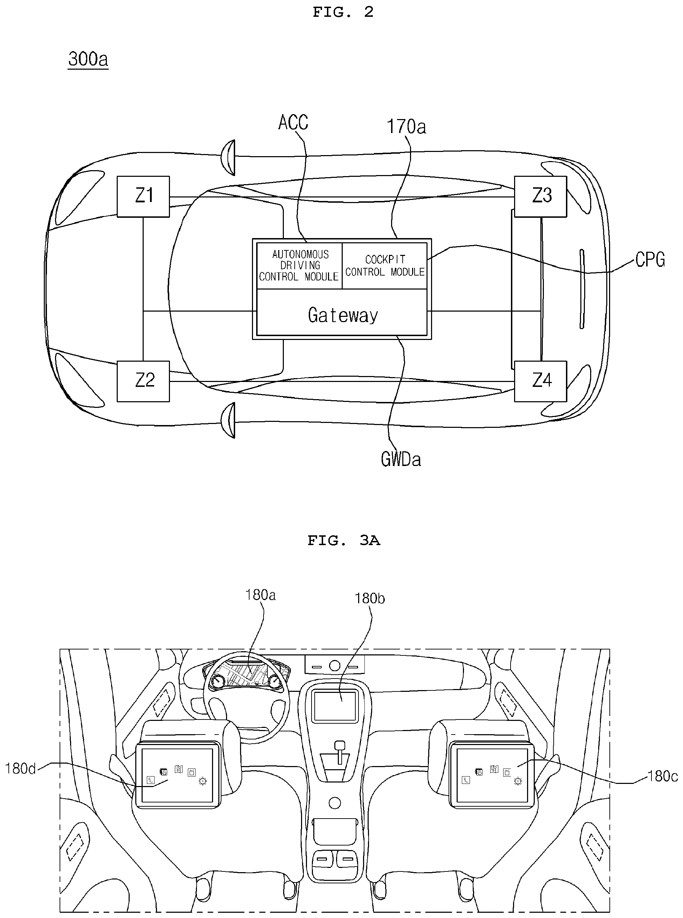

FIGS. 2 to 2C are diagrams illustrating various architectures of a vehicle communication gateway.

First, FIG. 2 is a diagram illustrating a first architecture of a vehicle communication gateway.

Referring to FIG. 2, a first architecture 300a can correspond to a zone-based architecture.

Accordingly, vehicle internal sensor devices and processors can be mounted in each of a plurality of zones Z1 to Z4, and a signal processing device 170a including a vehicle communication gateway GWDa can be disposed at the center of the plurality of zones Z1 to Z4.

Meanwhile, the signal processing device 170a can further include an autonomous driving control module ACC, a cockpit control module CPG, etc., in addition to the vehicle communication gateway GWDa.

The vehicle communication gateway GWDa in the signal processing device 170a can be a High Performance Computing (HPC) gateway.

That is, as an integrated HPC gateway, the signal processing device 170a of FIG. 2 can exchange data with an external communication module (not shown) or processors (not shown) in the plurality of zones Z1 to Z4.

FIG. 3A is a diagram illustrating an example of a vehicle display apparatus in a vehicle.

Referring to the figure, a cluster display 180a, an audio video navigation (AVN) display 180b, rear seat entertainment displays 180c and 180d, and a rear-view mirror display (not shown) can be mounted in the vehicle.

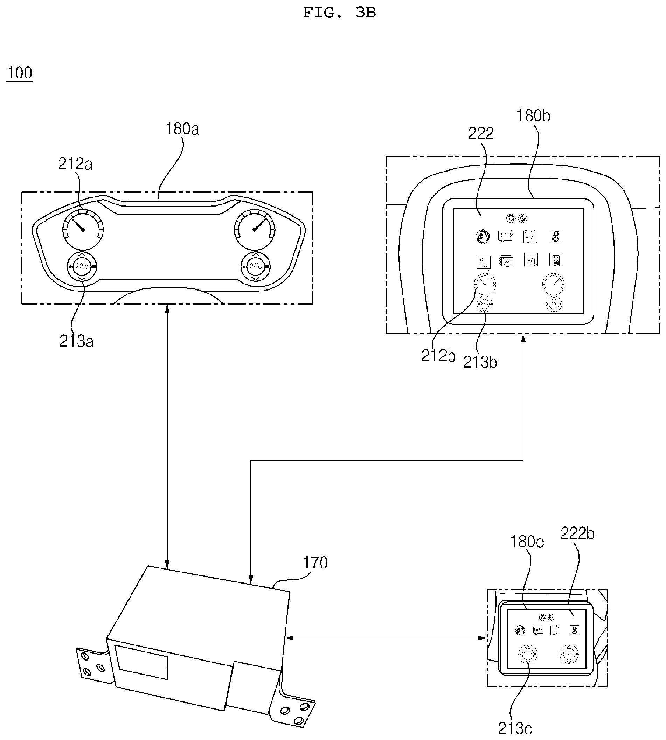

FIG. 3B is a diagram illustrating another example of a vehicle display apparatus in a vehicle.

A vehicle display apparatus 100 according to the embodiment of the present disclosure can include a plurality of displays 180a and 180b and a signal processing device 170 configured to perform signal processing in order to display images and information on the plurality of displays 180a and 180b, and to output an image signal to at least one of the displays 180a and 180b.

The first display 180a, which is one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

The signal processing device 170 can have a processor 175 provided therein, and first to third virtual machines (not shown) can be executed by a hypervisor 505 in the processor 175.

The second virtual machine (not shown) can be operated for the first display 180a, and the third virtual machine (not shown) can be operated for the second display 180b.

Meanwhile, the first virtual machine (not shown) in the processor 175 can be configured to set a shared memory 508 based on the hypervisor 505 for transmission of the same data to the second virtual machine (not shown) and the third virtual machine (not shown). Consequently, the first display 180a and the second display 180b in the vehicle can display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle can divide and process data.

Meanwhile, the first virtual machine (not shown) in the processor 175 can receive and process wheel speed sensor data of the vehicle, and can transmit the processed wheel speed sensor data to at least one of the second virtual machine (not shown) or the third virtual machine (not shown). Consequently, at least one virtual machine can share the wheel speed sensor data of the vehicle.

Meanwhile, the vehicle display apparatus 100 according to the embodiment of the present disclosure can further include a rear seat entertainment (RSE) display 180c configured to display driving state information, simple navigation information, various kinds of entertainment information, or an image.

The signal processing device 170 can further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c can be operated based on a Linux Operating System (OS), and others can be operated based on a Web Operating System (OS).

The signal processing device 170 according to the embodiment of the present disclosure can be configured to display the same information or the same images in a synchronized state on the displays 180a to 180c to be operated under various operating systems.

Meanwhile, FIG. 3B illustrates an example in which a vehicle speed indicator 212a and a vehicle internal temperature indicator 213a are displayed on a first display 180a, a home screen 222 including a plurality of applications, a vehicle speed indicator 212b, and a vehicle internal temperature indicator 213b is displayed on a second display 180b, and a second home screen 222b including a plurality of applications and a vehicle internal temperature indicator 213c is displayed on a third display 180c.

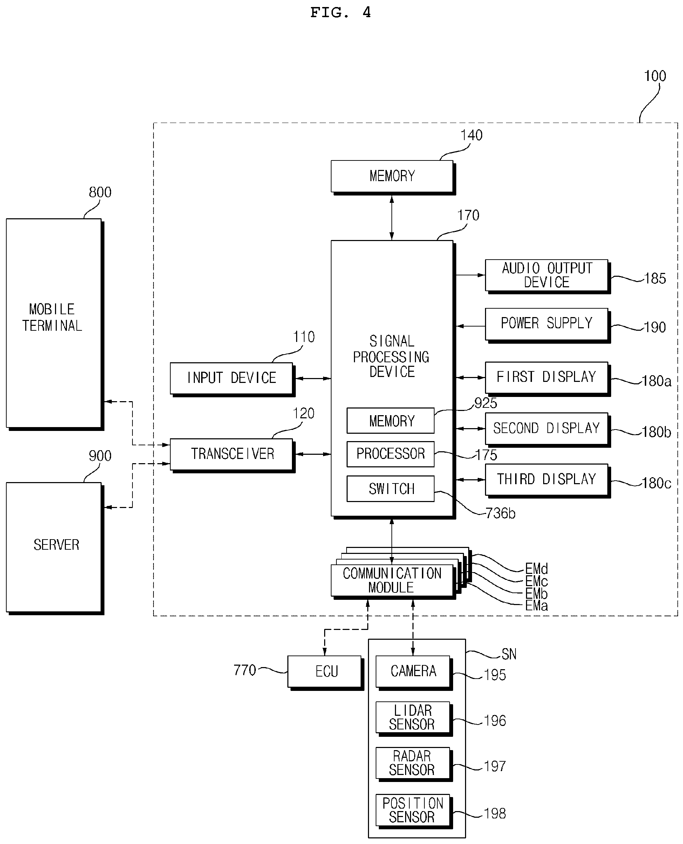

FIG. 4 is an internal block diagram illustrating an example of the vehicle display apparatus of FIG. 3B.

Referring to FIG. 4, a vehicle display apparatus 100 according to an embodiment of the present disclosure can include an input device 110, a transceiver 120 for communication with an external device, a plurality of communication modules EMa to EMd for internal communication, a memory 140, the signal processing device 170, a plurality of displays 180a to 180c, an audio output device 185, and a power supply 190.

The plurality of communication modules EMa to EMd can be disposed in a plurality of zones Z1 to Z4, respectively, in FIG. 2.

Meanwhile, the signal processing device 170 can be provided therein with a communication switch 736b for data communication with the respective communication modules EM1 to EM4.

The respective communication modules EM1 to EM4 can perform data communication with the plurality of sensor devices SN or the ECU 770.

Meanwhile, a plurality of sensor devices SN can include a camera 195, a lidar sensor 196, a radar sensor 197, or a position sensor 198.

The input device 110 can include a physical button or pad for button input or touch input.

Meanwhile, the input device 110 can include a microphone (not shown) for user voice input.

The transceiver 120 can wirelessly exchange data with a mobile terminal 800 or a server 900.

In particular, the transceiver 120 can wirelessly exchange data with a mobile terminal of a vehicle driver. Any of various data communication schemes, such as Bluetooth, Wi-Fi, WIFI Direct, and APIX, can be used as a wireless data communication scheme.

The transceiver 120 can receive weather information and road traffic state information, such as Transport Protocol Experts Group (TPEG) information, from a mobile terminal 800 or a server 900. To this end, the transceiver 120 can include a mobile communication module (not shown).

The plurality of communication modules EM1 to EM4 can receive sensor data and the like from the electronic control unit (ECU) 770 or the sensor device SN or a zonal signal processing device 170Z, and can transmit the received sensor data to the signal processing device 170.

Here, the sensor data can include at least one of vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, or vehicle internal humidity data.

The sensor data can be acquired from a heading sensor, a yaw sensor, a gyro sensor, a position sensor, a vehicle forward/backward movement sensor, a wheel sensor, a vehicle speed sensor, a car body inclination sensor, a battery sensor, a fuel sensor, a tire sensor, a steering-wheel-rotation-based steering sensor, a vehicle internal temperature sensor, or a vehicle internal humidity sensor.

Meanwhile, the position module can include a GPS module configured to receive GPS information or a position sensor 198.

Meanwhile, at least one of the plurality of communication modules EM1 to EM4 can transmit position information data sensed by the GPS module or the position sensor 198 to the signal processing device 170.

Meanwhile, at least one of the plurality of communication modules EM1 to EM4 can receive front image data of the vehicle, side-of-vehicle image data, rear image data of the vehicle, and obstacle-around-vehicle distance information from the camera 195, the lidar sensor 196, or the radar sensor 197, etc., and can transmit the received information to the signal processing device 170.

The memory 140 can store various data necessary for overall operation of the vehicle display apparatus 100, such as programs for processing or control of the signal processing device 170.

For example, the memory 140 can store data about the hypervisor and first to third virtual machines executed by the hypervisor in the processor 175.

The audio output device 185 can convert an electrical signal from the signal processing device 170 into an audio signal, and can output the audio signal. To this end, the audio output device 185 can include a speaker.

The power supply 190 can supply power necessary to operate components under control of the signal processing device 170. In particular, the power supply 190 can receive power from a battery in the vehicle.

The signal processing device 170 can control the overall operation of each device in the vehicle display apparatus 100.

For example, the signal processing device 170 can include a processor 175 configured to perform signal processing for the vehicle displays 180a and 180b.

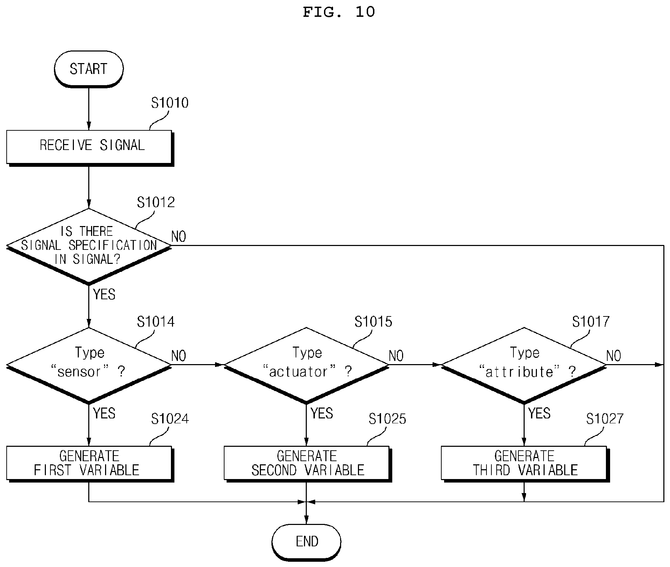

The processor 175 can execute the first to third virtual machines (not shown) on the hypervisor 505 (see FIG. 10) in the processor 175.

Among the first to third virtual machines (not shown) (see FIG. 10), the first virtual machine (not shown) can be called a server virtual machine, and the second and third virtual machines (not shown) and (not shown) can be called guest virtual machines.

For example, the first virtual machine (not shown) in the processor 175 can receive sensor data from the plurality of sensor devices, such as vehicle sensor data, position information data, camera image data, audio data, or touch input data, and can process and output the received sensor data.

As described above, the first virtual machine (not shown) can process most of the data, whereby 1:N data sharing can be achieved.

In another example, the first virtual machine (not shown) can directly receive and process CAN data, Ethernet data, audio data, radio data, USB data, and wireless communication data for the second and third virtual machines (not shown).

Further, the first virtual machine (not shown) can transmit the processed data to the second and third virtual machines (not shown).

Accordingly, only the first virtual machine (not shown), among the first to third virtual machines (not shown), can receive sensor data from the plurality of sensor devices, communication data, or external input data, and can perform signal processing, whereby load in signal processing by the other virtual machines can be reduced and 1:N data communication can be achieved, and therefore synchronization at the time of data sharing can be achieved.

Meanwhile, the first virtual machine (not shown) can be configured to write data in the shared memory 508, whereby the second virtual machine (not shown) and the third virtual machine (not shown) share the same data.

For example, the first virtual machine (not shown) can be configured to write vehicle sensor data, the position information data, the camera image data, or the touch input data in the shared memory 508, whereby the second virtual machine (not shown) and the third virtual machine (not shown) share the same data. Consequently, 1:N data sharing can be achieved.

Eventually, the first virtual machine (not shown) can process most of the data, whereby 1:N data sharing can be achieved.

Meanwhile, the first virtual machine (not shown) in the processor 175 can be configured to set the shared memory 508 based on the hypervisor 505 in order to transmit the same data to the second virtual machine (not shown) and the third virtual machine (not shown).

Meanwhile, the signal processing device 170 can process various signals, such as an audio signal, an image signal, and a data signal. To this end, the signal processing device 170 can be implemented in the form of a system on chip (SOC).

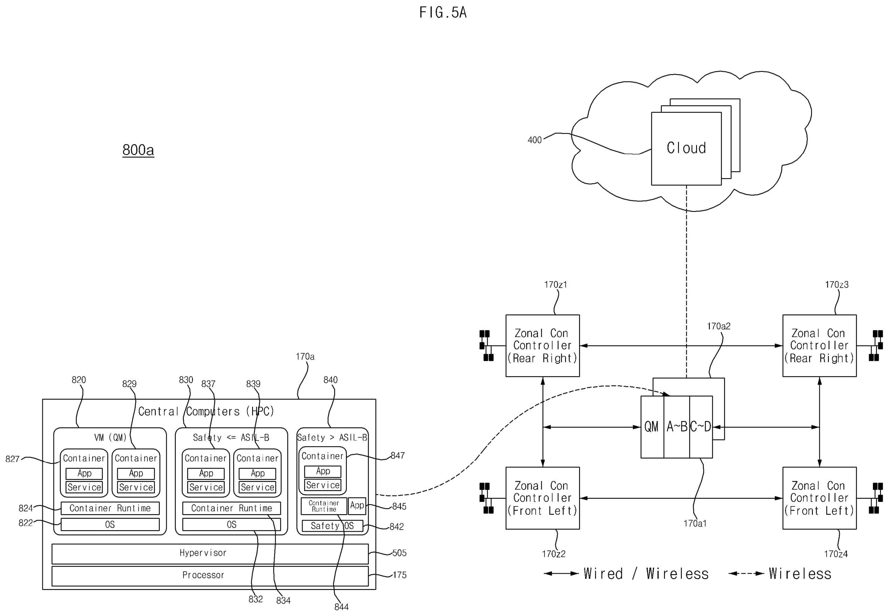

Meanwhile, the signal processing device 170 in the display apparatus 100 of FIG. 4 can be the same as signal processing devices 170, 170a1, and 170a2 of a vehicle display apparatus of FIG. 5A and subsequent figures.

FIGS. 5A to 5D are diagrams illustrating various examples of a vehicle display apparatus.

FIG. 5A is a diagram illustrating an example of a vehicle display apparatus according to an embodiment of the present disclosure.

Referring to FIG. 5A, a vehicle display apparatus 800a according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 can exchange data with the communication device 120 based on wired communication.

Meanwhile, the data received by the signal processing devices 170a1 and 170a2 can include camera data or sensor data.

For example, the vehicle internal sensor data can include at least one of vehicle wheel speed data, vehicle direction data, vehicle location data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, vehicle internal humidity data, external vehicle radar data or external vehicle lidar data.

Meanwhile, the camera data can include external vehicle camera data and vehicle internal camera data.

Meanwhile, the signal processing devices 170a1 and 170a2 can execute a plurality of virtual machines 820, 830, and 840 based on safety levels.

In the drawing, an example is illustrated in which the processor 175 in the signal processing device 170a executes the hypervisor 505, and executes first to third virtual machines 820 to 840 on the hypervisor 505 according to the Automotive Safety Integrity Level (ASIL).

The first virtual machine 820 can be a virtual machine corresponding to quality management (QM) which is the lowest risk level of the ASIL with no mandatory need.

The first virtual machine 820 can execute an operating system 822, a container runtime 824 on the operating system 822, and containers 827 and 829 on the container runtime 824.

The second virtual machine 820 can be a virtual machine corresponding to ASIL A or ASIL B with the combination of severity, exposure, and controllability values being 7 or 8.

The second virtual machine 820 can execute an operating system 832, a container runtime 834 on the operating system 832, and containers 837 and 839 on the container runtime 834.

The third virtual machine 840 can be a virtual machine corresponding to ASIL C or ASIL D with the combination of severity, exposure, and controllability values being 9 or 10.

Meanwhile, ASIL D can correspond to a grade that requires the highest level of safety.

The third virtual machine 840 can execute a safety operating system 842 and an application 845 on the operating system 842.

Meanwhile, the third virtual machine 840 can also execute the safety operating system 842, a container runtime 844 on the safety operating system 842, and a container 847 on the container runtime 844.

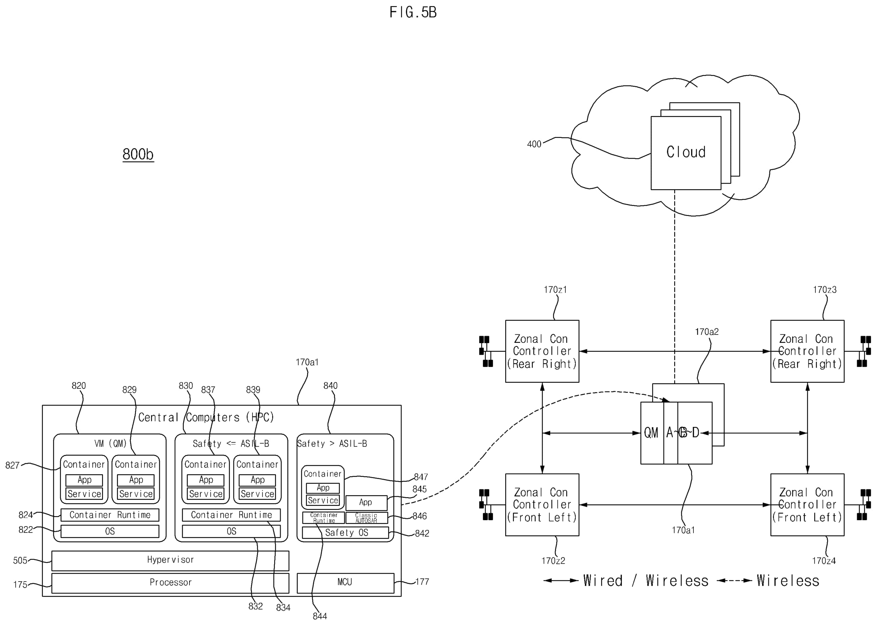

Meanwhile, unlike the drawing, the third virtual machine 840 can also be executed by a separate core, rather than by the processor 175, which will be described below with reference to FIG. 5B.

FIG. 5B is a diagram illustrating another example of a vehicle display apparatus according to an embodiment of the present disclosure.

Referring to FIG. 5B, a vehicle display apparatus 800b according to an embodiment of the present disclosure includes signal processing devices 170a1 and 170a2 and a plurality of zonal signal processing devices 170Z1 to 170Z4.

The vehicle display apparatus 800b of FIG. 5B is similar to the vehicle display apparatus 800a of FIG. 5A, with a difference being that the signal processing device 170a1 of FIG. 5B is partially different from the signal processing device 170a1 of FIG. 5A.

The following description will focus on the difference, in which the signal processing device 170a can include a processor 175 and a second processor 177.

The processor 175 in the signal processing device 170a1 executes the hypervisor 505, and executes the first and second virtual machines 820 and 830 on the hypervisor 505 according to the ASIL.

The first virtual machine 820 can execute the operating system 822, the container runtime 824 on the operating system 822, and the containers 827 and 829 on the container runtime 824.

The second virtual machine 820 can execute the operating system 832, the container runtime 834 on the operating system 832, and the containers 837 and 839 on the container runtime 834.

Meanwhile, the second processor 177 in the signal processing device 170a1 can execute the third virtual machine 840.

The third virtual machine 840 can execute the safety operating system 842, an AUTOSAR 845 on the operating system 842, and an application 845 on the AUTOSAR 845. That is, unlike FIG. 5A, the third virtual machine 840 can further execute the AUTOSAR 846 on the operating system 842.

Meanwhile, similarly to FIG. 5A, the third virtual machine 840 can also execute the safety operating system 842, the container runtime 844 on the safety operating system 842, and the container 847 on the container runtime 844.

Meanwhile, unlike the first and second virtual machines 820 and 830, the third virtual machine 840 that requires a high safety level is desirably executed by the second processor 177 that is a different core or a different processor.

Meanwhile, in the signal processing devices 170a1 and 170a2 of FIGS. 5A and 5B, if there is abnormality in the first signal processing device 170a, the second signal processing device 170a can operate which is provided for backup purposes.

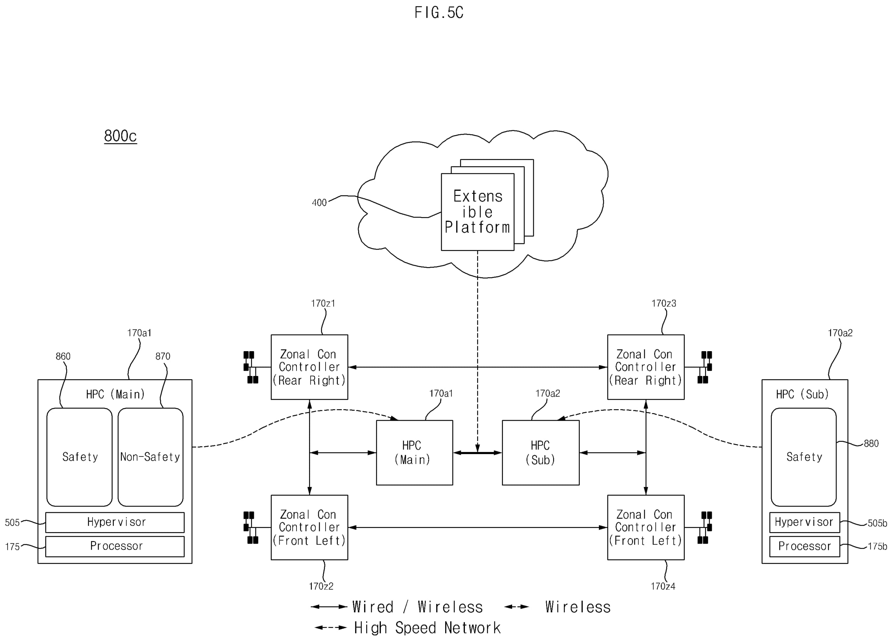

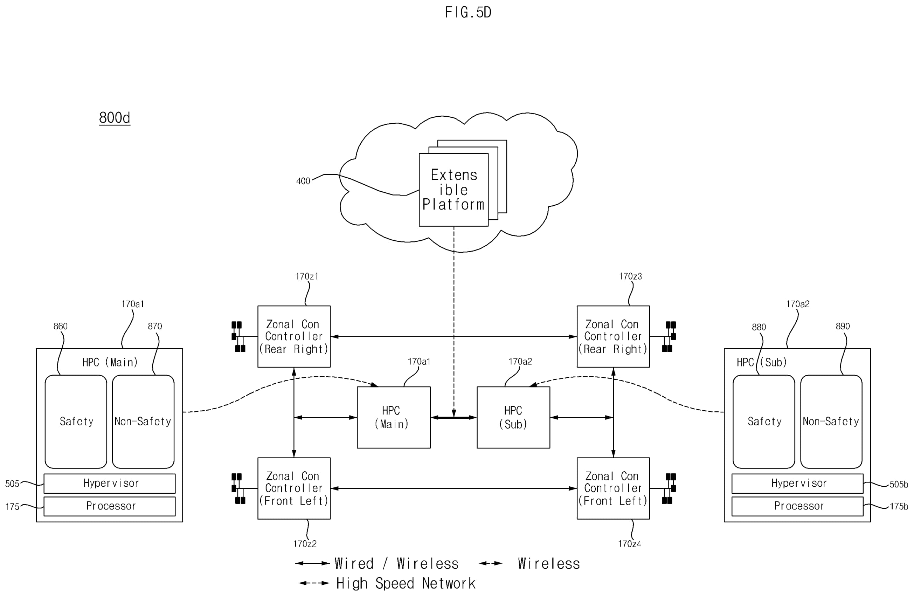

Unlike the example, the signal processing devices 170a1 and 170a2 can operate at the same time, among which the first signal processing device 170a can operate as a main device, and the second signal processing device 170a2 can operate as a sub device, which will be described below with reference to FIGS. 5C and 5D.

FIG. 5C is a diagram illustrating yet another example of a vehicle display apparatus according to an embodiment of the present disclosure.

Referring to FIG. 5C, a vehicle display apparatus 800c according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can transmit sensor data to the signal processing devices 170a1 and 170a2.

The signal processing devices 170a1 and 170a2 can receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 exchange data with the communication device 120 based on wired communication.

Meanwhile, the data received by the signal processing devices 170a1 and 170a2 can include camera data or sensor data.

Meanwhile, the processor 175 in the first signal processing device 170a1 of the signal processing devices 170a1 and 170a2 can execute the hypervisor 505, and can execute each of a safety virtual machine 860 and a non-safety virtual machine 870 on the hypervisor 505.

Meanwhile, the processor 175b in the second signal processing device 170a2 of the signal processing devices 170a1 and 170a2 can execute the hypervisor 505b, and can execute only a safety virtual machine 880 on the hypervisor 505.

In the method, safety and non-safety virtual machines can be processed separately by the first signal processing device 170a1 and the second signal processing device 170a2, thereby improving stability and processing speed.

Meanwhile, high-speed network communication can be performed between the first signal processing device 170a1 and the second signal processing device 170a2.

FIG. 5D is a diagram illustrating yet another example of a vehicle display apparatus according to an embodiment of the present disclosure.

Referring to FIG. 5D, a vehicle display apparatus 800d according to an embodiment of the present disclosure includes signal processing devices 170a1 and 170a2 and a plurality of zonal signal processing devices 170Z1 to 170Z4.

The vehicle display apparatus 800d of FIG. 5D is similar to the vehicle display apparatus 800c of FIG. 5C, with a difference being that the second signal processing device 170a2 of FIG. 5D is partially different from the second signal processing device 170a2 of FIG. 5C.

The processor 175b in the second signal processing device 170a2 of FIG. 5D can execute the hypervisor 505b, and can execute each of a safety virtual machine 880 and a non-safety virtual machine 890 on the hypervisor 505.

That is, unlike FIG. 5C, there is a difference in that the processor 175b in the second signal processing device 170a2 further executes the non-safety virtual machine 890.

In the method, safety and non-safety virtual machines can be processed separately by the first signal processing device 170a1 and the second signal processing device 170a2, thereby improving stability and processing speed.

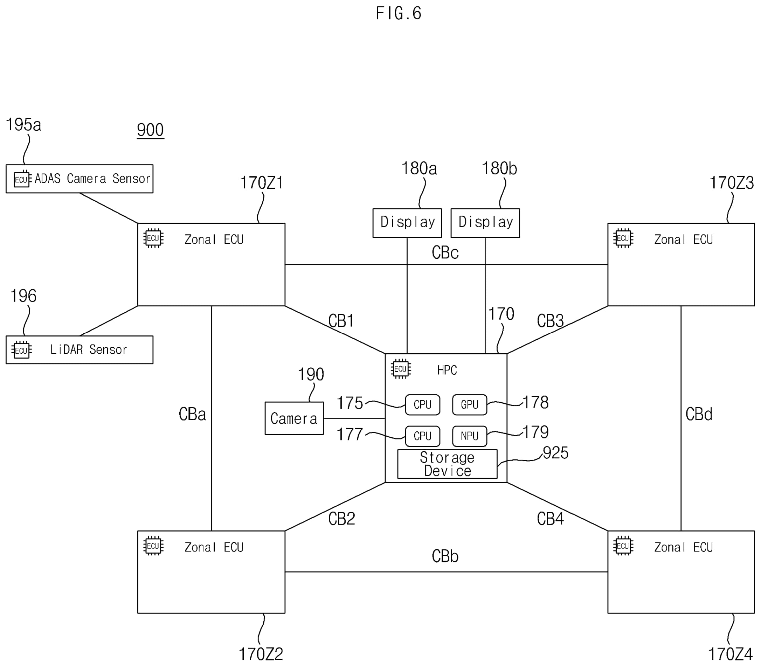

FIG. 6 is an exemplary block diagram of a vehicle display apparatus according to an embodiment of the present disclosure.

Referring to FIG. 6, a vehicle display apparatus 900 according to an embodiment of the present disclosure includes the signal processing device 170 and at least one display.

In the drawing, a cluster display 180a and an audio video navigation (AVN) display 180b are illustrated as the at least one display.

Meanwhile, the vehicle display apparatus 900 can further include the plurality of zonal signal processing devices 170Z1 to 170Z4.

In this case, the signal processing device 170 is a high-performance centralized signal processing and control device including a plurality of CPUs 175, GPUs 178, NPUs 179, etc., and can be referred to as a High Performance Computing (HPC) signal processing device or a central signal processing device.

The plurality of zonal signal processing devices 170Z1 to 170Z4 and the signal processing device 170 can be connected via wired cables CB1 to CB4.

Meanwhile, the plurality of zonal signal processing devices 170Z1 to 170Z4 can be connected via wired cables CBa to CBd.

In this case, the wired cables CBa to CBd can include CAN communication cable or Ethernet communication cable, or PCI Express cable.

Meanwhile, the signal processing device 170 according to an embodiment of the present disclosure can include at least one processor 175, 178, and 177, and a storage device 925 having a large capacity.

For example, the signal processing device 170 according to an embodiment of the present disclosure can include central processors 175 and 177, a graphic processor 178, and a neural processor 179.

Meanwhile, sensor data can be transmitted from at least one of the plurality of zonal signal processing devices 170Z1 to 170Z4 to the signal processing device 170. Particularly, the sensor data can be stored in the storage device 925 in the signal processing device 170.

In this case, the sensor data can include at least one of camera data, lidar data, radar data, vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data or vehicle internal humidity data.

In the drawing, an example is illustrated in which the camera data from the camera 195a and the lidar data from the lidar sensor 196 are input to a first zonal signal processing device 170Z1, and the camera data and the lidar data are transmitted to the signal processing device 170 via a second zonal signal processing device 170Z2 and a third zonal signal processing device 170Z3, and the like.

Meanwhile, data write speed or data read speed to write and read data to and from the storage device 925 is faster than a network speed when the sensor data is transmitted from at least one of the plurality of zonal signal processing devices 170Z1 to 170Z4 to the signal processing device 170, such that it is preferred to perform multi path routing so as to avoid bottlenecks in a network.

To this end, the signal processing device 170 according to an embodiment of the present disclosure can perform multi path routing based on Software Defined Network (SDN). Accordingly, stable network environment for data write and read operations can be ensured. Further, data can be transmitted to the storage device 925 by using multiple paths, such that data can be transmitted by dynamically changing a network configuration.

It is desirable that data communication between the plurality of zonal signal processing devices 170Z1 to 170Z4 and the signal processing device 170 in the vehicle display apparatus 900 according to an embodiment of the present disclosure is peripheral component interconnect express communication in order to provide high band and low delay communication.

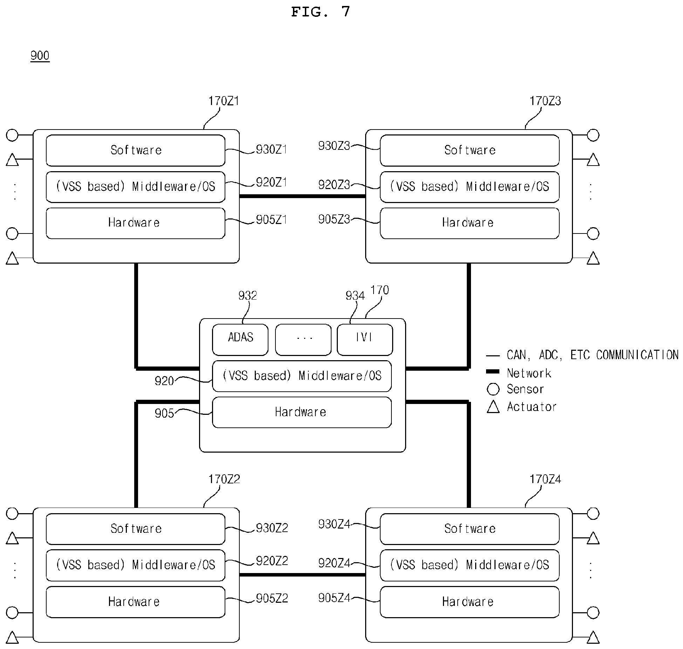

FIG. 7 is a block diagram illustrating another example of a vehicle display apparatus according to an embodiment of the present disclosure.

Referring to FIG. 7, a vehicle display apparatus 900 according to an embodiment of the present disclosure includes a central signal processing device 170 and at least one display.

Meanwhile, the vehicle display apparatus 900 can further include a plurality of zonal signal processing devices 170Z1 to 170Z4.

The plurality of zonal signal processing devices 170Z1 to 170Z4 can be configured to receive sensor data from a sensor device or can output a driving signal for driving an actuator.

Meanwhile, in the present disclosure, common middleware is executed on the operating system in order to perform high-speed and stable communication between the central signal processing device 170 and the plurality of zonal signal processing devices 170Z1 to 170Z4.

For example, the common middleware can be Vehicle Signal Specification (VSS)-based middleware.

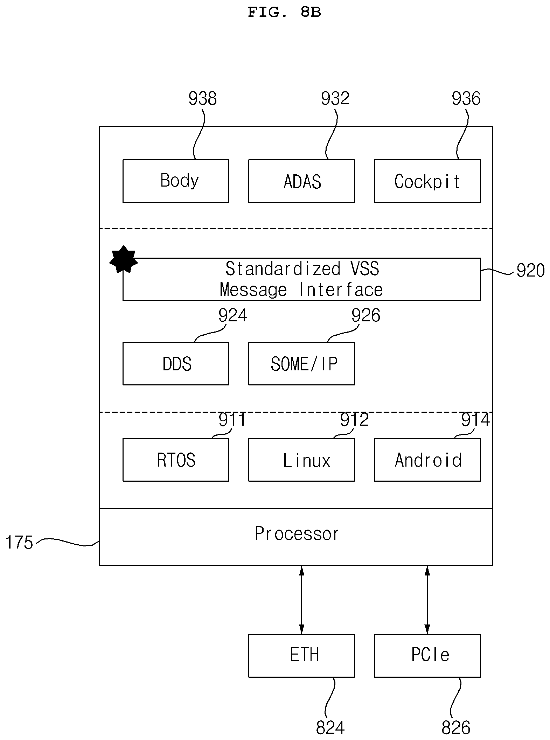

The central signal processing device 170 according to an embodiment of the present disclosure includes hardware 905, such as the processor 175, and the processor 175 executes an operating system 911 (see FIG. 8B), executes VSS-based middleware 920 on the operating system 911, and executes applications 932 and 934 on the VSS-based middleware 920.

Meanwhile, the plurality of zonal signal processing devices 170Z1 to 170Z4 according to an embodiment of the present disclosure each include hardware 905Z1 to 905Z4 such as processors 175Z1 to 175Z4, in which each of the processors 175Z1 to 175Z4 executes each operating system, executes each VSS-based middleware 920Z1 to 920Z4 on each operating system, and executes each software 920Z1 to 920Z4, such as applications, on each VSS-based middleware 920Z1 to 920Z4.

Meanwhile, the processor 175 in the central signal processing device 170 according to an embodiment of the present disclosure is configured to receive or transmit messages to VSS-based message interfaces 920Z1 to 920Z4 in the plurality of zonal signal processing devices 170Z1 to 170Z4, by using a VSS-based message interface 920. Accordingly, it is possible to perform high-speed and stable communication between the plurality of signal processing devices.

Particularly, during communication with an adjacent second signal processing device 170Z1, the processor 175 in the central signal processing device 170 according to an embodiment of the present disclosure is configured to receive or transmit messages to a second VSS-based message interface 920 in the second signal processing device 170Z1, based on the VSS-based message interface 920. Accordingly, it is possible to perform high-speed and stable communication between the plurality of signal processing devices.

Meanwhile, during communication with the second signal processing device 170Z1 configured to execute a different operating system from the signal processing device, the processor 175 in the central signal processing device 170 is configured to receive or transmit a message based on the VSS-based message interface 920. Accordingly, it is possible to perform high-speed and stable communication between the plurality of signal processing devices using different operating systems.

Meanwhile, the processor 175 in the central signal processing device 170 can be configured to execute an application 934 for controlling an IVI display 180b or an application 932 for vehicle driving assistance on the VSS-based middleware 920. Accordingly, each of the applications 932 and 934 can be stably executed.

Meanwhile, the respective processors 175Z1 to 175Z4 in the plurality of zonal signal processing devices 170Z1 to 170Z4 according to an embodiment of the present disclosure is configured to receive or transmit messages to the VSS-based message interface 920 in the central signal processing device 170 based on the VSS-based message interfaces 920Z1 to 920Z4. Accordingly, it is possible to perform high-speed and stable communication between the plurality of signal processing devices.

Meanwhile, the plurality of zonal signal processing devices 170Z1 to 170Z4 can be configured to perform CAN communication with a sensor device or an actuator.

Meanwhile, Ethernet communication or PCIe communication can take place between the plurality of zonal signal processing devices 170Z1 to 170Z4 and the central signal processing device 170.

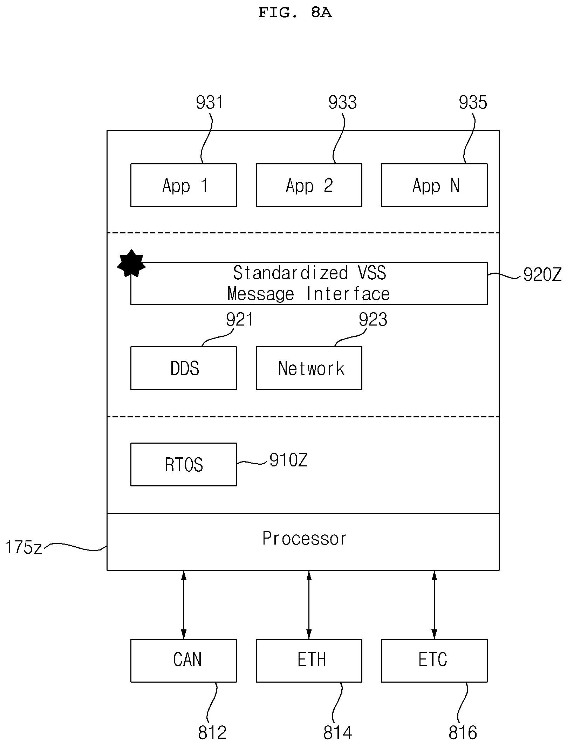

FIGS. 8A to 18B are diagrams referred to in the description of FIG. 6 or FIG. 7.

FIG. 8A is a diagram illustrating an example of operation of a processor in the zonal signal processing device of FIG. 7.

Referring to FIG. 8A, a processor 175Z in the zonal signal processing device 170Z can be configured to receive or transmit a CAN message from or to a CAN interface 812 for CAN communication with a sensor device or an actuator.

Meanwhile, the processor 175Z in the zonal signal processing device 170Z can be configured to receive or transmit an Ethernet message from or to an Ethernet interface 814 for communication with the central signal processing device 170.

Meanwhile, the processor 175Z in the zonal signal processing device 170Z executes a real-time operating system (RTOS) 910Z, executes the VSS-based middleware 920Z on the operating system 910Z, and executes applications 931, 933, and 935 on the VSS-based middleware 920Z.

The processor 175Z in the zonal signal processing device 170Z can further execute a Data Distribution Service (DDS) 921, a network 923, or the like on the operating system 910Z, thereby ensuring high computing performance in data processing.

Meanwhile, each of the plurality of zonal signal processing devices 170Z1 to 170Z4 executes the common VSS-based middleware 920Z, thereby performing high-speed and stable communication between the plurality of zonal signal processing devices 170Z1 to 170Z4.

Meanwhile, the processor 175Z in the zonal signal processing device 170Z executes the real-time operating system 910Z, executes the message interface 920Z, which is the VSS-based middleware, on the operating system 910Z, and executes the applications 931, 933, and 935 on the VSS-based message interface 920Z.

Meanwhile, each of the plurality of zonal signal processing devices 170Z1 to 170Z4 executes the common VSS-based message interface 920Z, thereby performing high-speed and stable communication between the plurality of zonal signal processing devices 170Z1 to 170Z4.

FIG. 8B is a diagram illustrating an example of operation of a processor in the central signal processing device of FIG. 7.

Referring to FIG. 8B, the processor 175 in the central signal processing device 170 can be configured to receive or transmit an Ethernet message from or to an Ethernet interface 824 for communication with the plurality of zonal signal processing devices 170Z1 to 170Z4.

Meanwhile, the processor 175 in the central signal processing device 170 can be configured to receive or transmit a PCIe message from or to a PCIe interface 826 for communication with the plurality of zonal signal processing devices 170Z1 to 170Z4, the memory 140, the display 180, or the transceiver 120.

Meanwhile, the processor 175 in the central signal processing device 170 executes an operating system, executes the VSS-based middleware 920 on the operating system, and executes applications 932, 936, and 938 on the VSS-based middleware 920.

Particularly, the processor 175 can be configured to execute an application 936 for controlling the display 180 or an application 932 for vehicle driving assistance on the VSS-based middleware 920. Accordingly, the applications can be stably executed.

In this case, the operating system can include the real-time operating system (RTOS) 911, Linux 912, or Android 914.

Meanwhile, the central signal processing device 170 can be a computing device having higher computing performance than the plurality of zonal signal processing devices 170Z1 to 170Z4, and the operating system of the central signal processing device 170 can be different from the operating system of the plurality of zonal signal processing devices 170Z1 to 170Z4.

Meanwhile, the processor 175 in the central signal processing device 170 can further execute a Data Distribution Service (DDS) 924 or Scalable service-Oriented MiddlewarE over IP (SOME/IP) on the operating system, thereby ensuring high computing performance in data processing.

Meanwhile, the central signal processing device 170 executes the same common VSS-based middleware 920 as that of the plurality of zonal signal processing devices 170Z1 to 170Z4, thereby performing high-speed and stable communication between the central signal processing device 170 and the plurality of zonal signal processing devices 170Z1 to 170Z4.

Particularly, the central signal processing device 170 and the first zonal signal processing device 170Z1 execute the common VSS-based middleware, such that high-speed and stable communication can be performed between the central signal processing device 170 and the first zonal signal processing device 170Z1.

Meanwhile, the processor 175 in the central signal processing device 170 executes an operating system, executes the message interface 920, which is the VSS-based middleware, on the operating system, and executes the applications 932, 936, and 938 on the VSS-based message interface 920.

Meanwhile, the central signal processing device 170 and each of the plurality of zonal signal processing devices 170Z1 to 170Z4 execute the common VSS-based message interface, such that high-speed and stable communication can be performed between the central signal processing device 170 and the plurality of zonal signal processing devices 170Z1 to 170Z4.

Particularly, the central signal processing device 170 and the first zonal signal processing device 170Z1 execute the common VSS-based message interface, such that high-speed and stable communication can be performed between the central signal processing device 170 and the first zonal signal processing device 170Z1.

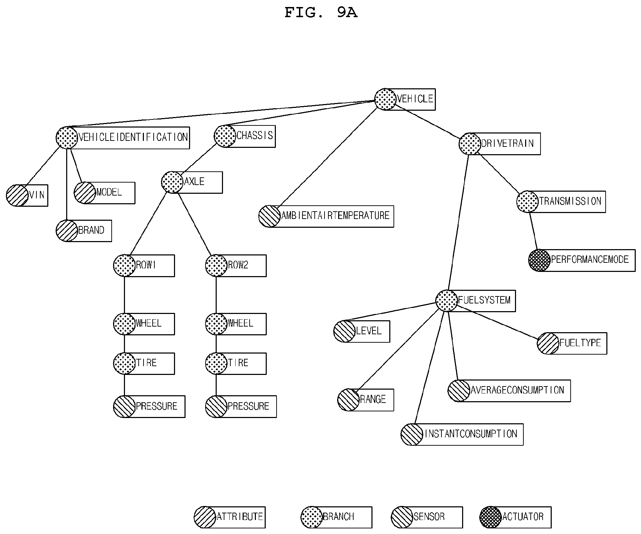

FIG. 9A is a diagram illustrating an example of a structure of vehicle data.

Referring to FIG. 9A, sensor data, actuator data, and the like in a vehicle can be represented as leaves in a tree structure.

During transmission of a signal in a vehicle, data based on the tree structure can be transmitted as illustrated herein.

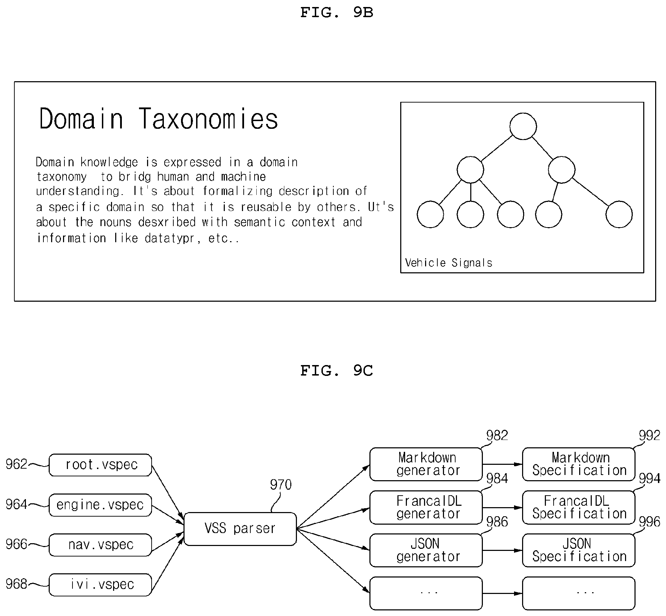

FIG. 9B is a diagram illustrating a link between a plurality of domains.

Referring to FIG. 9B, two or more domain classifications can be connected in order to transmit a signal in a vehicle.

FIG. 9C is a diagram referred to in the description of vehicle signal specification (VSS).

Referring to FIG. 9C, root information 962, engine information 964, navigation information 966, or IVI display information 968 can be parsed by a parser 970 of the VSS, and can be transformed into Markdown specification 992, Franca IDL specification 994, or JSON specification 996 by a Franca IDL generator 984 or a JSON generator 986.

FIG. 10 is a flowchart illustrating an operation of transforming the VSS.

Referring to FIG. 10, the processor 175 in the central signal processing device 170 or each of the processors 170Z1 to 170Z4 in the plurality of zonal signal processing devices 170Z1 to 170Z4 receives a signal (S1010).

For example, the processor 175 in the central signal processing device 170 or each of the processors 170Z1 to 170Z4 in the plurality of zonal signal processing devices 170Z1 to 170Z4 can be configured to receive the Markdown specification 992, the Franca IDL specification 994, or the JSON specification 996 of FIG. 9C.

Then, the processor 175 in the central signal processing device 170 or each of the processors 170Z1 to 170Z4 in the plurality of zonal signal processing devices 170Z1 to 170Z4 can determine whether there is a signal specification in the received signal (S1012), and if so, the processor 175 or each of the processors 170Z1 to 170Z4 can determine whether the signal specification is sensor data (S1014), and if so, the processor 175 or each of the processors 170Z1 to 170Z4 can generate a first variable corresponding to the sensor data (S1024).

Meanwhile, if the signal specification is not the sensor data in operation 1014 (S1014), the processor 175 in the central signal processing device 170 or each of the processors 170Z1 to 170Z4 in the plurality of zonal signal processing devices 170Z1 to 170Z4 can determine whether the signal specification is actuator data (S1015), and if so, the processor 175 or each of the processors 170Z1 to 170Z4 can determine a second variable corresponding to the actuator data (S1025).

Meanwhile, if the signal specification is not the actuator data in operation 1015 (S1015), the processor 175 in the central signal processing device 170 or each of the processors 170Z1 to 170Z4 in the plurality of zonal signal processing devices 170Z1 to 170Z4 can determine whether the signal specification is attribute data (S1017), and if so, the processor 175 or each of the processors 170Z1 to 170Z4 can determine a third variable corresponding to the attribute data (S1027).

As a result, the processor 175 in the central signal processing device 170 or each of the processors 170Z1 to 170Z4 in the plurality of zonal signal processing devices 170Z1 to 170Z4 can be configured to transform the received data into VSS-based data. Accordingly, it is possible to perform high-speed and stable communication between the plurality of signal processing devices.

Meanwhile, transformation of the VSS-based data can be performed by VSS-based middleware.

For example, the VSS-based middleware 920 in the processor 175 of the central signal processing device 170 can be configured to execute a code converter (not shown), to transform the received data into VSS-based data.

In another example, by executing the code converter, the VSS-based middleware 920Z1 to 920Z4 of each of the processors 170Z1 to 170Z4 in the plurality of zonal signal processing devices 170Z1 to 170Z4 can be configured to execute the code converter to transform the received data into VSS-based data. Accordingly, it is possible to perform high-speed and stable communication between the plurality of signal processing devices.

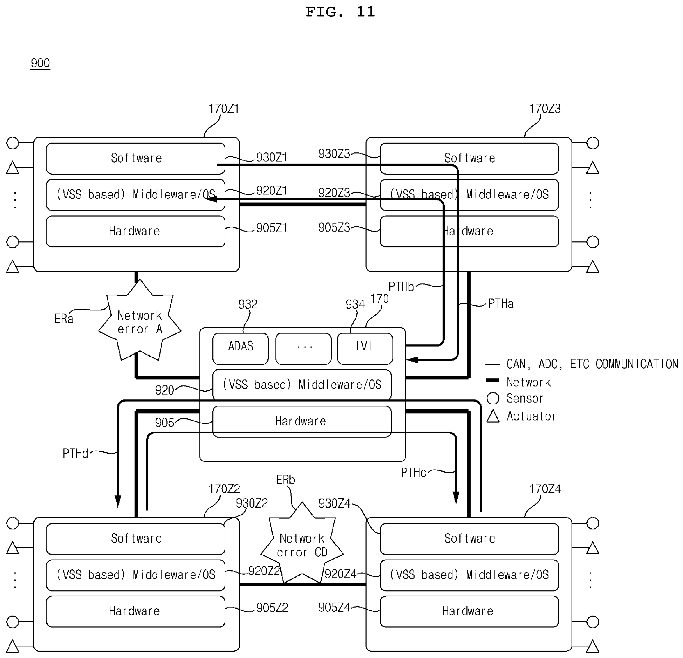

FIG. 11 is a diagram illustrating a case where a network error occurs between signal processing devices.

Referring to FIG. 11, a network error ERa can occur between the central signal processing device 170 and a first zonal signal processing device 170Z1 among the plurality of zonal signal processing devices 170Z1 to 170Z4 and the central signal processing device 170.

Meanwhile, in response to a network error occurring between the central signal processing device 170 and the first zonal signal processing device 170Z1, the processor 175 in the central signal processing device 170 can be configured to receive or transmit a message to the first zonal signal processing device 170Z1 via an adjacent third zonal signal processing device 170Z3.

Particularly, in response to a network error occurring between the central signal processing device 170 and the first zonal signal processing device 170Z1, the processor 175 in the central signal processing device 170 can be configured to receive or transmit a message to the second signal processing device 170Z1 via the third signal processing device 170Z3, based on the VSS-based message interface 920. Accordingly, stable communication can be performed even in response to a network error occurring.

Meanwhile, in response to a network error occurring between the central signal processing device 170 and the first zonal signal processing device 170Z1, a processor 175Z1 in the first zonal signal processing device 170Z1 can be configured to receive or transmit a message to the central signal processing device 170 via the adjacent third zonal signal processing device 170Z3.

Particularly, in response to a network error occurring between the central signal processing device 170 and the first zonal signal processing device 170Z1, the processor 175Z1 in the first zonal signal processing device 170Z1 can be configured to receive or transmit a message to the central signal processing device 170 via the adjacent third zonal signal processing device 170Z3, by using a VSS-based message interface 920Z1. Accordingly, stable communication can be performed even in response to a network error occurring.

Meanwhile, a network error ERb can occur between the second zonal signal processing device 170Z2 and a fourth zonal signal processing device 170Z4 among the plurality of zonal signal processing devices 170Z1 to 170Z4 and the central signal processing device 170.

Meanwhile, in response to a network error occurring between the second zonal signal processing device 170Z2 and the fourth zonal signal processing device 170Z4, a processor 175Z2 in the second zonal signal processing device 170Z2 can be configured to receive or transmit a message to the fourth zonal signal processing device 170Z4 via the adjacent central signal processing device 170, by using a VSS-based message interface 920Z2. Accordingly, stable communication can be performed even in response to a network error occurring.

Meanwhile, in response to a network error occurring between the second zonal signal processing device 170Z2 and the fourth zonal signal processing device 170Z4, a processor 175Z4 in the fourth zonal signal processing device 170Z4 can be configured to receive or transmit a message to the second zonal signal processing device 170Z2 via the adjacent central signal processing device 170, by using a VSS-based message interface 920Z4. Accordingly, stable communication can be performed even in response to a network error occurring.

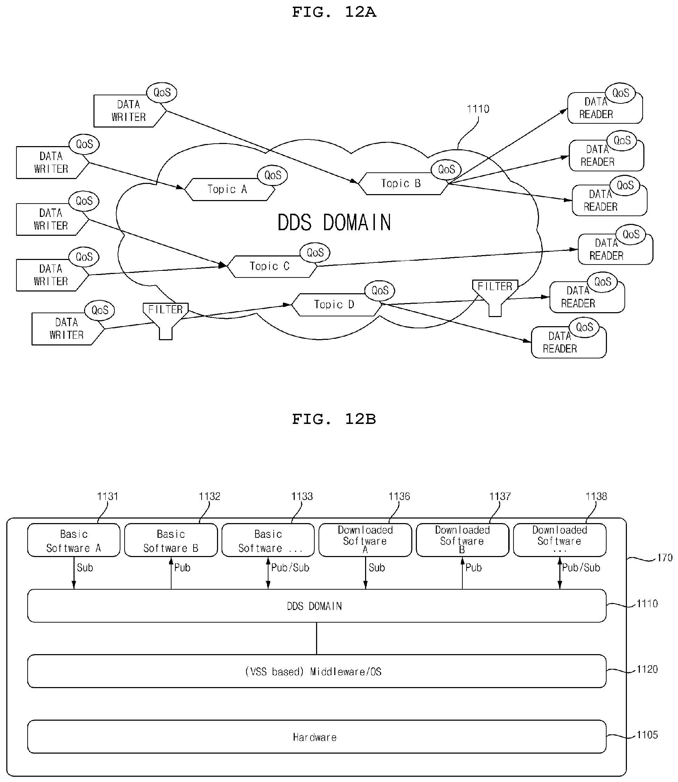

FIG. 12A is a diagram illustrating a data distribution service (DDS) domain in VSS-based middleware.

Referring to FIG. 12A, the DDS domain can be executed in the VSS-based middleware.

For example, as illustrated in FIG. 8A, the processor 175Z in the zonal signal processing device 170Z can be configured to execute a DDS domain 921 along with VSS-based middleware 920Z.

To this end, the processor 175Z in the zonal signal processing device 170Z can be configured to execute the VSS-based message interface 920.

In another example, as illustrated in FIG. 8B, the processor 175 in the central signal processing device 170 can be configured to execute a DDS domain 924 along with the VSS-based middleware 920.

To this end, the processor 175 in the central signal processing device 170 can be configured to execute the VSS-based message interface 920Z.

Accordingly, various data can be input and output, and particularly, high-speed and stable communication can be performed between a plurality of signal processing devices having different operating systems.

FIGS. 12B is a diagram referred to in the description of FIG. 12A.

Referring to FIG. 12B, the processor 175 in the central signal processing device 170 or the processor 175Z in the zonal signal processing device 170Z executes an operating system 1120, executes the VSS-based middleware on the operating system 1120, and executes a DDS domain 1110 on the operating system 1120 or the VSS-based middleware.

Meanwhile, the processor 175 in the central signal processing device 170 or the processor 175Z in the zonal signal processing device 170Z can be configured to execute, on the DDS domain 1110, pre-installed applications 1131, 1132, and 1133 or applications 1136, 1137, and 1138 downloaded from an external server.

Meanwhile, the processor 175 in the central signal processing device 170 or the processor 175Z in the zonal signal processing device 170Z can be configured to receive or transmit data between the VSS-based middleware and the applications 1131, 1132, 1133, 1136, 1137, and 1138 via the DDS domain 1110.

Meanwhile, the processor 175 in the central signal processing device 170 or the processor 175Z in the zonal signal processing device 170Z can be configured to transform the data of the applications 1136, 1137, and 1138, downloaded from the external server, into VSS-based data, and can be configured to transmit the data to the VSS-based middleware or another signal processing device via the DDS domain 1110. Accordingly, it is possible to perform high-speed and stable communication between the plurality of signal processing devices.

Meanwhile, the data transformation can be performed as illustrated in FIG. 10.

Meanwhile, the processor 175 in the central signal processing device 170 or the processor 175Z in the zonal signal processing device 170Z can be configured to transmit data, received from another signal processing device, to the VSS-based middleware 920 or to an external server 1400 or to another signal processing device via the DDS domain 1110. Accordingly, it is possible to perform high-speed and stable communication between the plurality of signal processing devices.

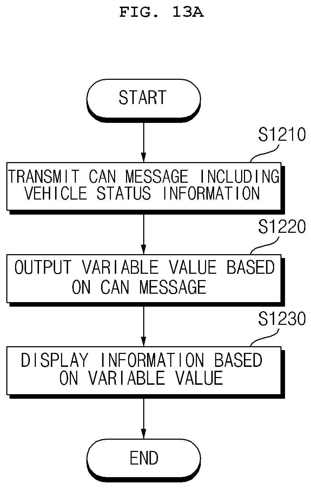

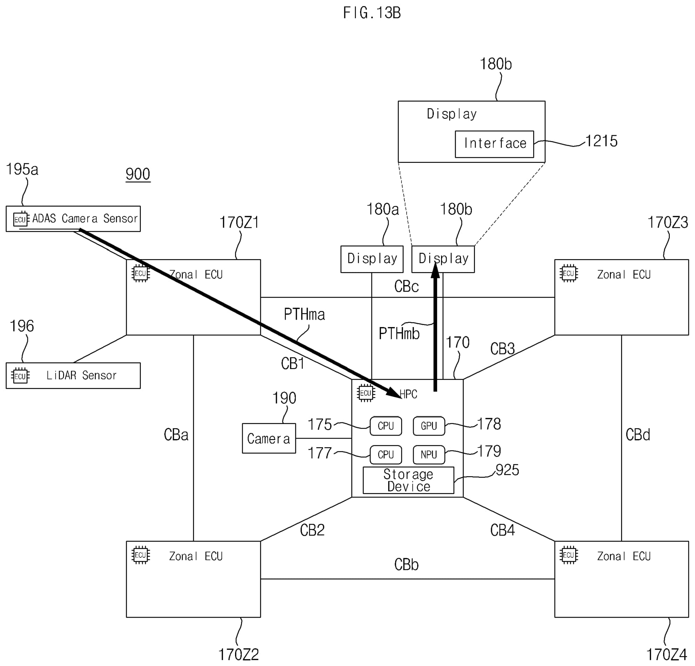

FIGS. 13A and 13B are diagrams explaining transformation and transmission of a CAN message.

First, referring to FIG. 13A, the processor 175Z in the zonal signal processing device 170Z receives a CAN message, including vehicle status information, from a sensor device and the like (S1210).

For example, the vehicle status information can include camera data, information as to whether there is abnormality in the anti-lock braking system (ABS) of a vehicle, tire pressure information of a vehicle.

Then, the processor 175Z in the zonal signal processing device 170Z can output a variable value based on the vehicle status information in the CAN message (S1220).

For example, if the vehicle status information in the CAN message is sensor data, the processor 175Z in the zonal signal processing device 170Z can generate and output a first variable corresponding to the sensor data.

In another example, if the vehicle status information in the CAN message is actuator data, the processor 175Z in the zonal signal processing device 170Z can generate and output a second variable corresponding to the actuator data.

That is, the processor 175Z in the zonal signal processing device 170Z can be configured to transform the CAN message, including the vehicle status information, into a VSS-based message and can output the message, by using the VSS-based middleware.

Then, the processor 175Z in the zonal signal processing device 170Z can be configured to transmit the VSS-based message, including the vehicle status information, to the central signal processing device 170.

Next, the central signal processing device 170 can be configured to transmit the VSS-based message, including the vehicle status information, to the display 180.

Accordingly, the display 180 can display the vehicle status information based on the VSS-based message (S1230).

Accordingly, it is possible to perform high-speed and stable communication between the plurality of signal processing devices, and the vehicle state information can be rapidly displayed.

FIG. 13B is a diagram illustrating an example of displaying a camera image on the second display 180b in such a manner that camera data received from the first zonal signal processing device 170Z1 is transmitted to the central signal processing device 170 along a signal path of PTHma and is transmitted to the second display 180b along a signal path of PTHmb.

Referring to FIG. 13B, the first zonal signal processing device 170Z1 can be configured to receive a CAN message including camera data from a front camera 195a through CAN communication and the like.

Meanwhile, in the case in which the CAN message includes camera data, the processor 175Z1 in the first zonal signal processing device 170Z1 can generate and output a first variable corresponding to the camera data.

That is, the processor 175Z1 in the first zonal signal processing device 170Z1 can be configured to transform the CAN message, including the camera data, into the VSS-based message and can output the message, by using the VSS-based middleware.

Further, the central signal processing device 170 can be configured to receive the VSS-based message, including the camera data, from the first zonal signal processing device 170Z1.

In this case, the processor 175 in the central signal processing device 170 can rapidly receive the VSS-based message including the camera data, based on the VSS-based message interface 920.

Meanwhile, the processor 175 in the central signal processing device 170 can be configured to transmit the VSS-based message, including the camera data, to the second display 180b based on the VSS-based message interface 920.

In this case, by using a VSS-based message interface 1215, the second display 180b can be configured to receive the VSS-based message, including the camera data, and can display a camera image corresponding to the camera data. Accordingly, the camera data can be rapidly transmitted and the camera image can be displayed based on the camera data.

Meanwhile, the processor 175 in the central signal processing device 170 can also receive the CAN message including the camera data.

In this case, the processor 175 in the central signal processing device 170 can be configured to transform the CAN message, including the camera data, into the VSS-based message and can be configured to transmit the transformed VSS-based message to the display 180. Accordingly, it is possible to perform high-speed and stable communication between the plurality of signal processing devices.

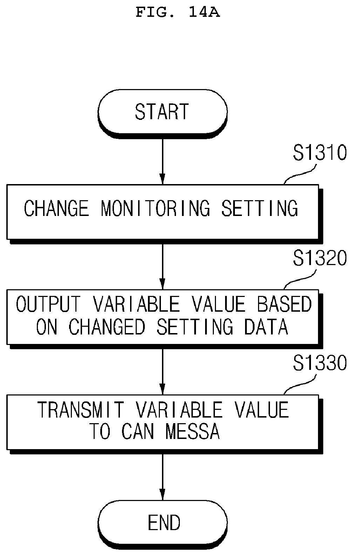

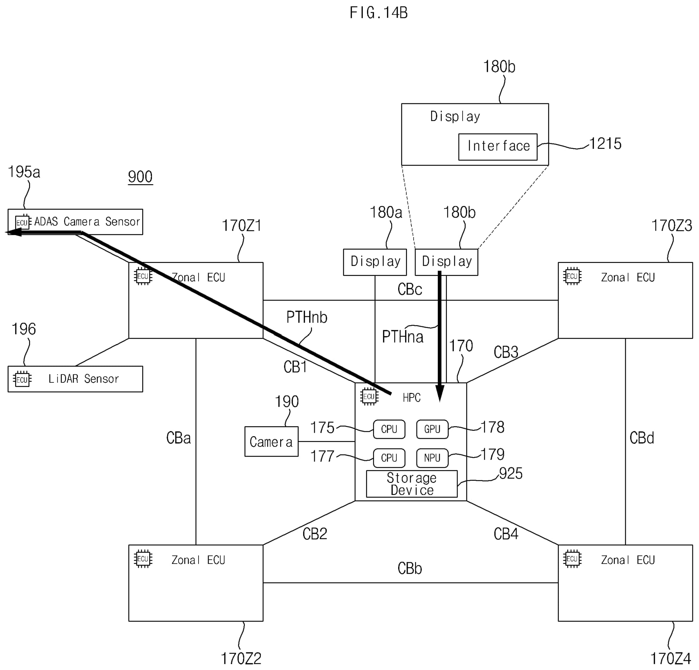

FIGS. 14A and 14B are diagrams explaining an example of generating and transmitting a CAN message according to a change in sensor setting.

First, referring to FIG. 14A, when a sensor setting is changed through the second display 180b, the processor 175 in the central signal processing device 170 can be configured to receive sensor setting change data (S1310).

For example, the sensor setting change data can include camera setting change data, vehicle ABS setting change data, vehicle tire pressure setting change data, and the like.

Then, the processor 175 in the central signal processing device 170 can output a variable value based on the sensor setting change data (S1320).

For example, if the sensor setting change data in the CAN message is sensor data, the processor 175Z in the zonal signal processing device 170Z can generate and output a first variable value corresponding to the sensor data.

In another example, if the sensor setting change data is actuator data, the processor 175Z in the zonal signal processing device 170Z can generate and output a second variable value corresponding to the actuator data.

That is, the processor 175 in the central signal processing device 170 can output the VSS-based message, including the sensor setting change data, by using the VSS-based middleware.

Then, the processor 175 in the central signal processing device 170 can be configured to transmit the VSS-based message, including the sensor setting change data, to the zonal signal processing device 170Z.

Next, the processor 175Z in the zonal signal processing device 170Z can be configured to transform the VSS-based message, including the sensor setting change data, into a CAN message (S1330).

Subsequently, the processor 175Z in the zonal signal processing device 170Z can be configured to transmit the CAN message, including the sensor setting change data, to a sensor device and the like.

Accordingly, it is possible to perform high-speed and stable communication between the plurality of signal processing devices, and the sensor setting change data can be rapidly transmitted.

FIG. 14B is a diagram illustrating an example in which if the sensor setting change data is input through the second display 180b, the sensor setting change data is transmitted to the central signal processing device 170 along a signal path of PTHna, and is transmitted to the first zonal signal processing device 170Z and a first camera 195a along a signal path of PTHnb.

Referring to FIG. 14B, the second display 180b can be configured to transmit the VSS-based message, including the sensor setting change data, to the central signal processing device 170 by using a VSS-based message interface 1215.

Meanwhile, the central signal processing device 170 can be configured to receive the VSS-based message including the sensor setting change data, and can be configured to transmit the message to the first zonal signal processing device 170Z1 through Ethernet communication.

Then, the first zonal signal processing device 170Z1 can be configured to transform the VSS-based message, including the sensor setting change data, into a CAN message including the sensor setting change data, and can be configured to transmit the CAN message including the sensor setting change data to the first camera 195a.

Accordingly, the camera setting of the first camera 195a can be rapidly changed.

Meanwhile, the processor 175 in the central signal processing device 170 can be configured to transform the sensor setting change data into a CAN message and can be configured to transmit the message.

That is, in the case in which the sensor setting is changed through the display 180, the processor 175 in the central signal processing device 170 can be configured to transform the received sensor setting change data into the VSS-based message, can be configured to transform the transformed VSS-based message into the CAN message, and can be configured to transmit the transformed CAN message to the first zonal signal processing device 170Z1 through CAN communication. Accordingly, it is possible to perform high-speed and stable communication between the plurality of signal processing devices.

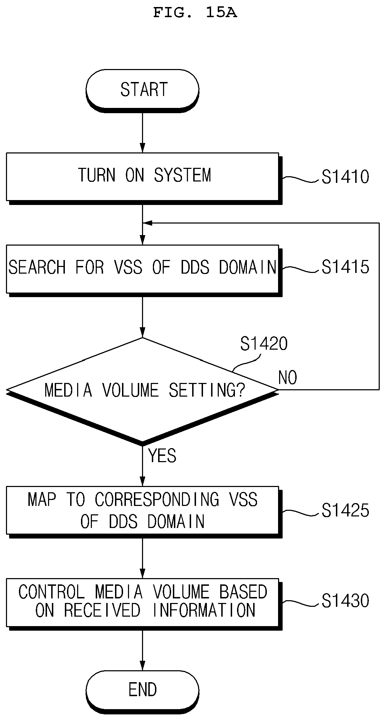

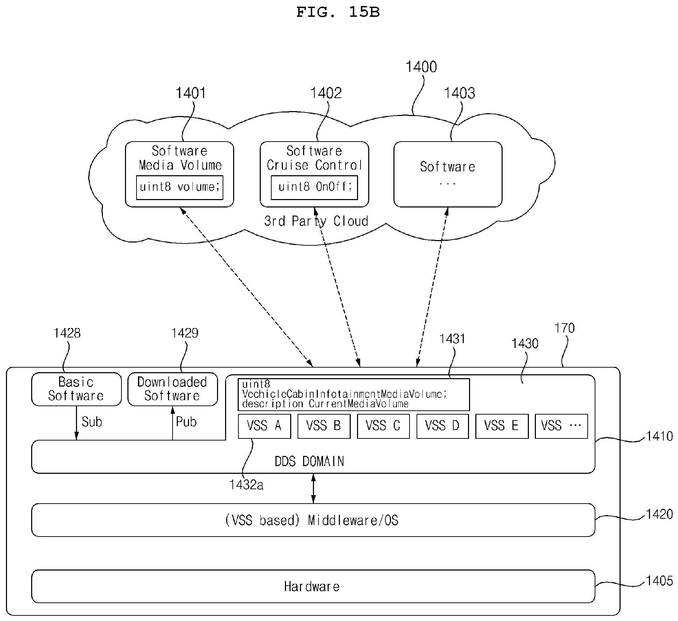

FIGS. 15A and 15B are diagrams explaining an example in which in response to data, received from the external server 1400, not being mapped to a DDS domain, operation is performed after mapping the data by searching for a meaning of a vehicle signal of the received data.

First, referring to FIG. 15A, the central signal processing device 170 can be turned on (S1410).

Then, the processor 175 in the central signal processing device 170 can be configured to receive data from the external server 1400.

For example, the processor 175 in the central signal processing device 170 can be configured to receive data related to media volume setting from the external server 1400.

Meanwhile, in the case in which the data, received from the external server 1400, is not mapped to a VSS-based message in the DDS domain 1410, the processor 175 in the central signal processing device 170 searches for the meaning of a vehicle signal of the received data (S1415).

Then, the processor 175 in the central signal processing device 170 can determine whether the meaning of the vehicle signal of the received data corresponds to a media volume setting based on a result of searching by the external server 1400 and the like (S1420), and if so, the processor 175 in the central signal processing device 170 can map the data to the VSS-based message including the media volume setting in the DDS domain 1410 (S1425).

Subsequently, the processor 175 in the central signal processing device 170 can control a media volume setting of the audio output device 185 and the like based on the VSS-based message including the media volume setting (S1430). Accordingly, the media volume can be stably set.

FIG. 15B is a diagram illustrating a system including the central signal processing device 170 and the external server 1400.

Referring to FIG. 15B, the central signal processing device 170 can be configured to execute a hardware driver 1405, an operating system, VSS-based middleware 1420, and a DDS domain 1410.

Meanwhile, the DDS domain 1410 can exchange data with basic software 1428 or can exchange data with downloaded software.

Meanwhile, the processor 175 in the central signal processing device 170 can be configured to receive data from the external server 1400.

For example, among cruise control data 1401, software data 1403, and data 1410 related to media volume setting, the processor 175 in the central signal processing device 170 can be configured to receive the data 1410 related to media volume setting from the external server 1400.

Meanwhile, in the case in which the data 1410 related to media volume setting, which is received from the external server 1400, is not mapped to the VSS-based message in the DDS domain 1410, the processor 175 in the central signal processing device 170 can search for the meaning of the vehicle signal of the received data.

Meanwhile, if the meaning of the vehicle signal of the received data corresponds to a media volume setting based on a result of searching by the external server 1400 and the like, the processor 175 in the central signal processing device 170 can map the data to the VSS-based message including the media volume setting in the DDS domain 1410.

Then, the processor 175 in the central signal processing device 170 can control a media volume setting of the audio output device 185 and the like based on the VSS-based message including the media volume setting. Accordingly, the media volume can be stably set.

As illustrated in FIGS. 15A and 15B, in the case in which the data received from the external server 1400 is not mapped to the DDS domain 1410, the processor 175 in the central signal processing device 170 can operate after mapping the data by searching for the meaning of the vehicle signal of the received data. Accordingly, stable communication can be performed.

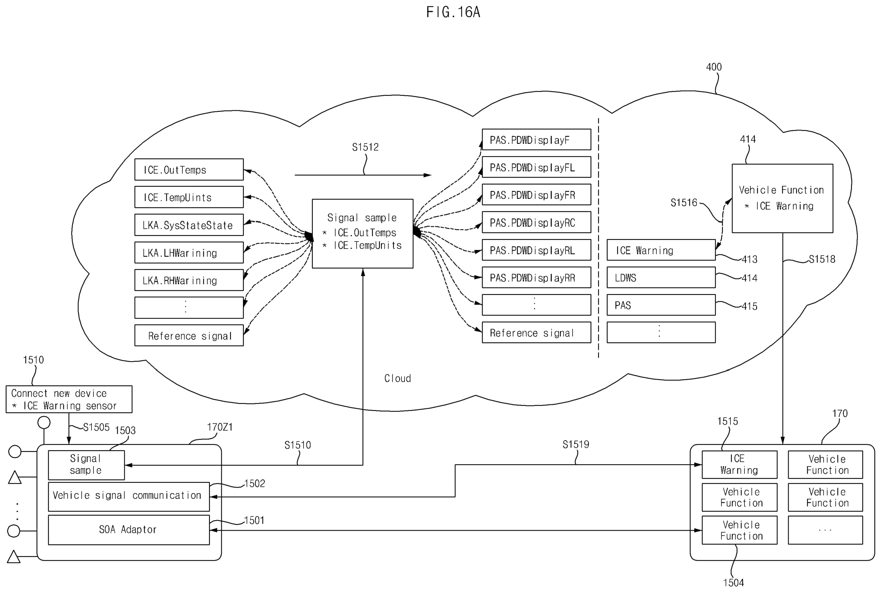

FIG. 16A is a diagram illustrating an example of a new device connected to the first zonal signal processing device 170Z1.

Referring to FIG. 16A, a new device 1510 can be an ice warning sensor.

Meanwhile, the new device 1510 can be configured to transmit a sample signal to the connected first zonal signal processing device 170Z1 (S1505).

Meanwhile, the first zonal signal processing device 170Z1 can be configured to execute an SOA adaptor 1501 and VSS-based middleware 1502.

Meanwhile, the first zonal signal processing device 170Z1 can be configured to transmit the received sample signal 1503 to an external server 400 (S1510).

The external server 400 can compare the received sample signal with a reference signal (S1512), can select a recommended function such as icy road notification (S1516), and can be configured to transmit the selected recommended function to the central signal processing device 170 (S1518).

Meanwhile, the processor 175 in the central signal processing device 170 can be configured to receive a recommended function associated with the new device 1510, and can be configured to transmit the recommended function 1515 to the VSS-based middleware 1502 in the first zonal signal processing device 170Z1 based on the VSS-based message interface 920 (S1519).

Accordingly, the recommended function 1515 associated with the new device 1510 can be performed during operation of the new device 1510.

Particularly, in the case in which the new device 1510 is an ice warning sensor, the recommended function, such as the icy road notification, can be executed.

Meanwhile, unlike FIG. 16A, the processor 175 in the central signal processing device 170 can be configured to receive a sample signal received from the new device in response to the new device being connected, can be configured to transmit the sample signal to the external server 400, and can be configured to receive vehicle function data, provided based on the sample signal, from the external server 400.

Meanwhile, the processor 175 in the central signal processing device 170 can directly execute a service based on the vehicle function data received from the external server 400, or can be configured to transmit the data to the adjacent first zonal signal processing device 170Z1. Accordingly, it is possible to perform high-speed and stable communication between the plurality of signal processing devices.

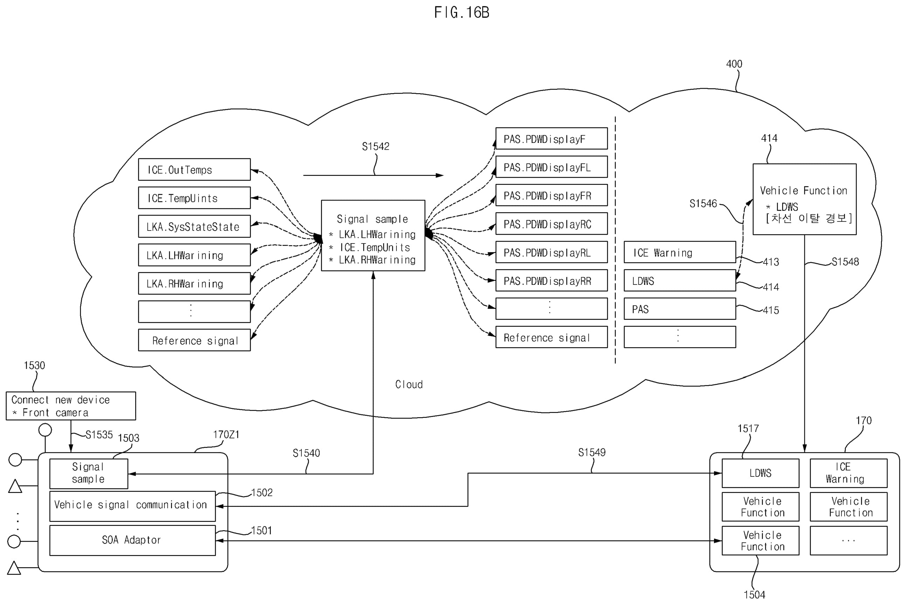

FIG. 16B is a diagram illustrating another example of a new device connected to the first zonal signal processing device 170Z1.

Referring to FIG. 16B, a new device 1530 can be a front camera.

Meanwhile, the new device 1530 can be configured to transmit a sample signal to the connected first zonal signal processing device 170Z1 (S1535).

Meanwhile, the first zonal signal processing device 170Z1 can be configured to execute the SOA adaptor 1501 and the VSS-based middleware 1502.

Meanwhile, the first zonal signal processing device 170Z1 can be configured to transmit the received sample signal 1503 to the external server 400 (S1540).

The external server 400 can compare the received sample signal with a reference signal (S1542), can select a recommended function such as lane departure notification (S1546), and can be configured to transmit the selected recommended function to the central signal processing device 170 (S1548).

Meanwhile, the processor 175 in the central signal processing device 170 can be configured to receive a recommended function 1517 associated with the new device 1530, and can be configured to transmit the recommended function to the VSS-based middleware 1502 in the first zonal signal processing device 170Z1 based on the VSS-based message interface 920 (S1549).

Accordingly, the recommended function associated with the new device 1530 can be performed during operation of the new device 1530.

Particularly, in the case in which the new device 1530 is a front camera, the recommended function, such as the lane departure notification, can be executed.

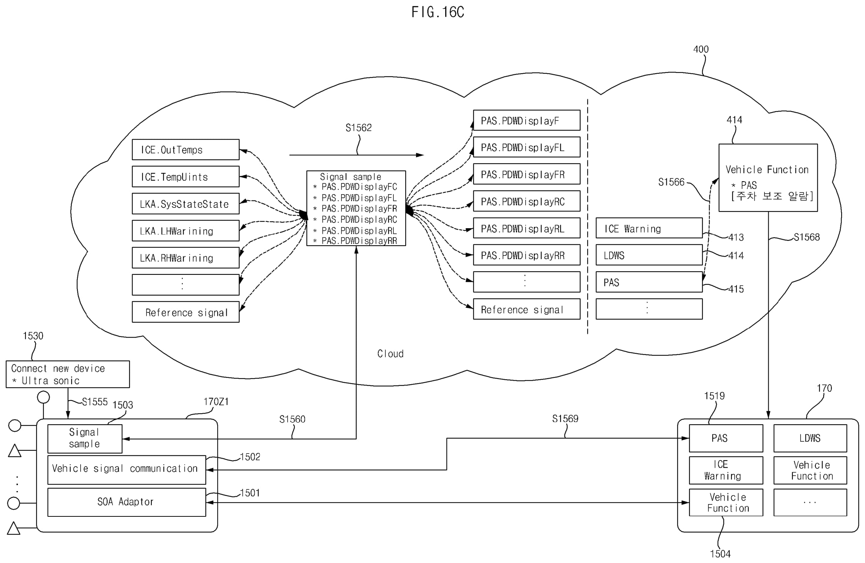

FIG. 16C is a diagram illustrating yet another example of a new device connected to the first zonal signal processing device 170Z1.

Referring to FIG. 16C, a new device 1530 can be an ultrasonic sensor.

Meanwhile, the new device 1530 can be configured to transmit a sample signal to the connected first zonal signal processing device 170Z1 (S1555).

Meanwhile, the first zonal signal processing device 170Z1 can be configured to execute the SOA adaptor 1501 and the VSS-based middleware 1502, and the like.

Meanwhile, the first zonal signal processing device 170Z1 can be configured to transmit the received sample signal 1503 to the external server 400 (S1560).

The external server 400 can compare the received sample signal with a reference signal (S1562), can select a recommended function such as parking assistance alarm (S1566), and can be configured to transmit the selected recommended function to the central signal processing device 170 (S1568).

Meanwhile, the processor 175 in the central signal processing device 170 can be configured to receive a recommended function 1519 associated with the new device 1530, and can be configured to transmit the recommended function to the VSS-based middleware 1502 in the first zonal signal processing device 170Z1 based on the VSS-based message interface 920 (S1569).

Accordingly, the recommended function associated with the new device 1530 can be performed during operation of the new device 1530.

Particularly, in the case in which the new device 1530 is an ultrasonic sensor, the recommended function, such as the parking assistance alarm, can be executed.

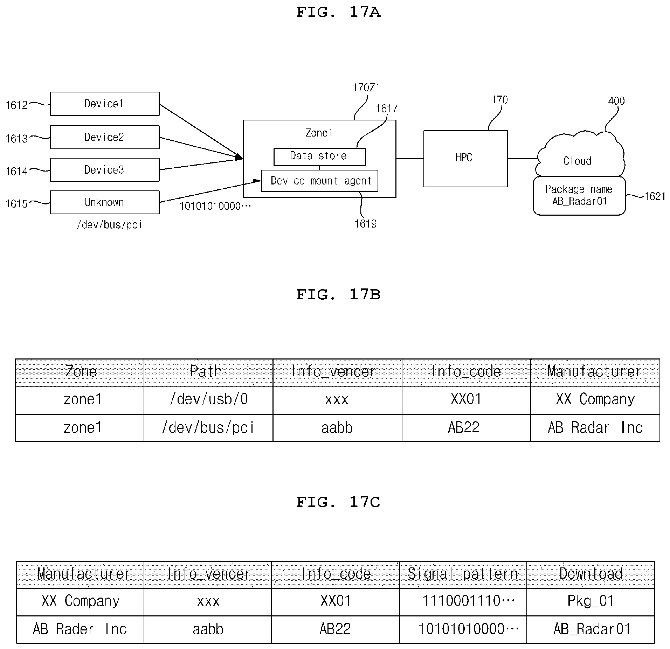

FIG. 17A is a diagram illustrating an example in which a new device is mounted in the first zonal signal processing device 170Z1.

Referring to FIG. 17A, in the case where a new device 1615 is mounted in addition to existing devices 1612, 1613, and 1614, the processor 175Z1 in the first zonal signal processing device 170Z1 can be configured to receive information related to the new device.

Meanwhile, the processor 175Z1 in the first zonal signal processing device 170Z1 can store (1617) information related to the new device, and can be configured to execute a device mount agent (1619).

The information related to the new device can include location information, path information, manufacturer information, and code information of the device.

Meanwhile, the processor 175 in the central signal processing device 170 can be configured to receive the information related to the new device, including the location information, path information, manufacturer information, and code information of the device, from the first zonal signal processing device 170Z1 based on the VSS-based message interface 920.

In addition, the processor 175 in the central signal processing device 170 can be configured to transmit the manufacturer information and code information, among the information related to the new device, to the external server 400. Accordingly, the information related to the new device can be transmitted to the server.

Meanwhile, the external server 400 can identify device information 1621 of the new device based on the received manufacturer information and code information.

In the drawing, an example is illustrated in which the device information 1621 of the new device is radar.

Meanwhile, the information related to the new device of FIG. 17B can be stored in the central signal processing device 170 or the first zonal signal processing device 170Z1.

FIG. 17B is a diagram illustrating an example of information related to a new device.

Referring to FIG. 17B, the information related to the new device can include location information of the device, such as "zone 1," path information, such as "/dev/bus/pci," manufacturer information, such as "aabb," code information, such as "AB22," and device information 1621, such as "Radar."

Meanwhile, the information related to the new device can be stored in the central signal processing device 170 or the first zonal signal processing device 170Z1.

FIG. 17C is a diagram illustrating another example of information related to a new device.

Referring to FIG. 17C, the information related to the new device can include device information 1621, such as "Radar," manufacturer information, such as "aabb," signal pattern information, such as "10101010000," and download information, such as "AB_Radar01."

Meanwhile, the information related to the new device of FIG. 17C can be stored in the external server 400.

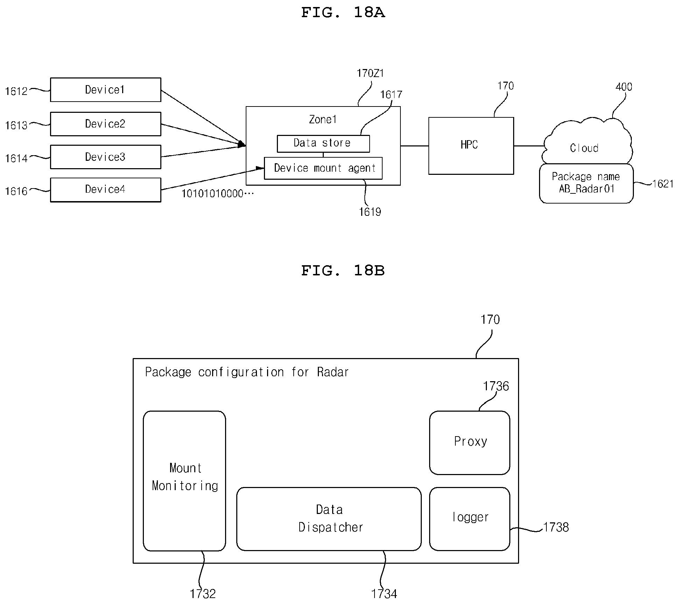

FIGS. 18A to 18C are diagrams referred to in the description of FIGS. 17A to 17C.

FIG. 18A is a diagram illustrating an example in which a new device is mounted in the first zonal signal processing device 170Z1, as illustrated in FIG. 17A.

The processor 175 in the central signal processing device 170 can be configured to transmit only some of the information related to the new device, which is received from the first zonal signal processing device 170Z1, to the server 400.

Then, the processor 175 in the central signal processing device 170 can be configured to receive the device information 1621, such as "Radar," from the server 400.

FIG. 18B is a diagram illustrating an example of operation of a central signal processing device for radar which is a new device.

Referring to FIG. 18B, the processor 175 in the central signal processing device 170 can be configured to execute mount monitoring 1732, data dispatcher 1734, logger, proxy, and the like of the new device.

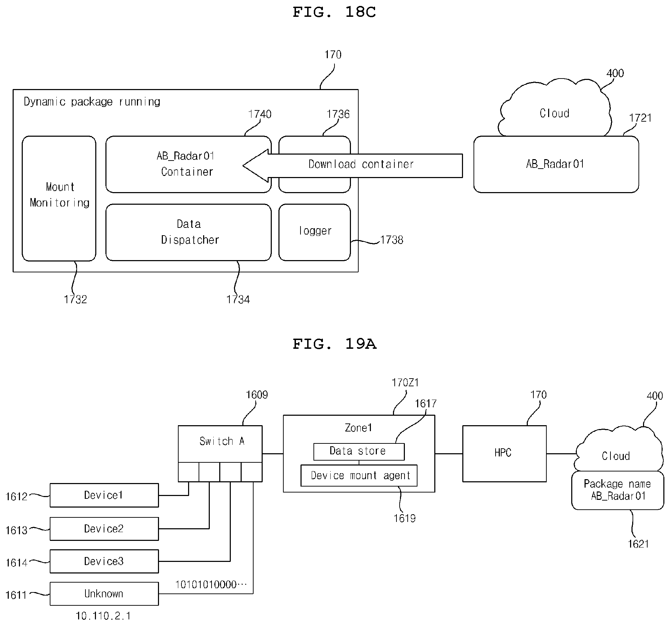

FIG. 18C is a diagram illustrating an example of downloading a container from a server.

Referring to FIG. 18C, the processor 175 in the central signal processing device 170 can be configured to receive a container or application, associated with radar 1721 which is a new device, from the server 400.

Then, the processor 175 in the central signal processing device 170 can install and execute the received container 1740 associated with the radar which is the new device.

Alternatively, the processor 175 in the central signal processing device 170 can be configured to transmit the received container 1740, associated with the radar which is the new device, to the first zonal signal processing device 170Z1. Accordingly, the container or application associated with the new device can be stably executed or transmitted.

That is, the processor 175 in the central signal processing device 170 can be configured to receive the container or application corresponding to the new device from the server 400, and execute the received container or application or transmit the received container or the application the second signal processing device 170Z1. Accordingly, the container or application associated with the new device can be stably executed or transmitted.

FIG. 19A is a diagram illustrating an example in which a network connection is established between a new device and the first zonal signal processing device 170Z1 through a switch 1609.

Referring to FIG. 19A, in the case in which a network connection is established with a new device 1611, in addition to the existing device 1612, 1613, and 1614, through the switch 1609, the processor 175Z1 in the first zonal signal processing device 170Z1 can be configured to receive information related to the new device.

Meanwhile, the processor 175Z1 in the first zonal signal processing device 170Z1 can store (1617) information related to the new device, and can be configured to execute a device network connection agent (1619).

The information related to the new device can include network information, manufacturer information, and code information of the device.

Meanwhile, the processor 175 in the central signal processing device 170 can be configured to receive the information related to the new device, including the network information, the manufacturer information, and the code information of the device, from the first zonal signal processing device 170Z1 based on the VSS-based message interface 920.

In addition, the processor 175 in the central signal processing device 170 can be configured to transmit the manufacturer information and the code information, among the information related to the new device, to the external server 400. Accordingly, the information related to the new device can be transmitted to the server.

Meanwhile, the external server 400 can identify device information 1621 of the new device based on the received manufacturer information and code information.

In the drawing, an example is illustrated in which the device information 1621 of the new device is radar.

Meanwhile, the device information 1621 identified by the external server 400 can be transmitted to the central signal processing device 170.

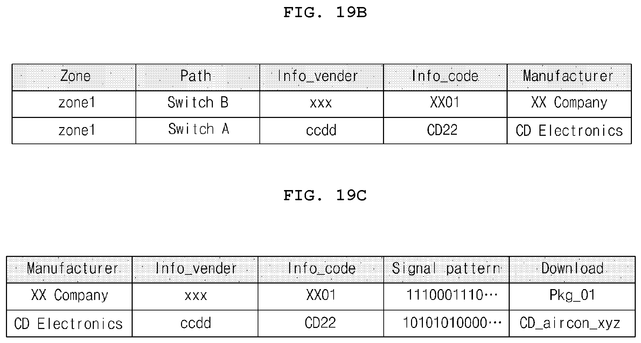

FIG. 19B is a diagram illustrating an example of information related to a new device.

Referring to FIG. 19B, the information related to the new device can include location information of the device, such as "zone 1," network information, such as "Switch A," manufacturer information, such as "ccbb," and code information, such as "CD22."

Meanwhile, the information related to the new device of FIG. 19B can be stored in the central signal processing device 170 or the first zonal signal processing device 170Z1.

FIG. 19C is a diagram illustrating another example of information related to a new device.

Referring to FIG. 19C, the information related to the new device can include manufacturer information, such as "ccbb," signal pattern information, such as "10101010000," and download information, such as "CD_aircon_xyz."

Meanwhile, the information related to the new device of FIG. 19C can be stored in the external server 400.

That is, in response to a network connection being established with the new device, the processor 175 in the central signal processing device 170 can be configured to receive the network information, manufacturer information, and code information of the device, and can be configured to transmit the manufacturer information and the code information to the external server 1400. Accordingly, the information related to the new device can be transmitted to the server.

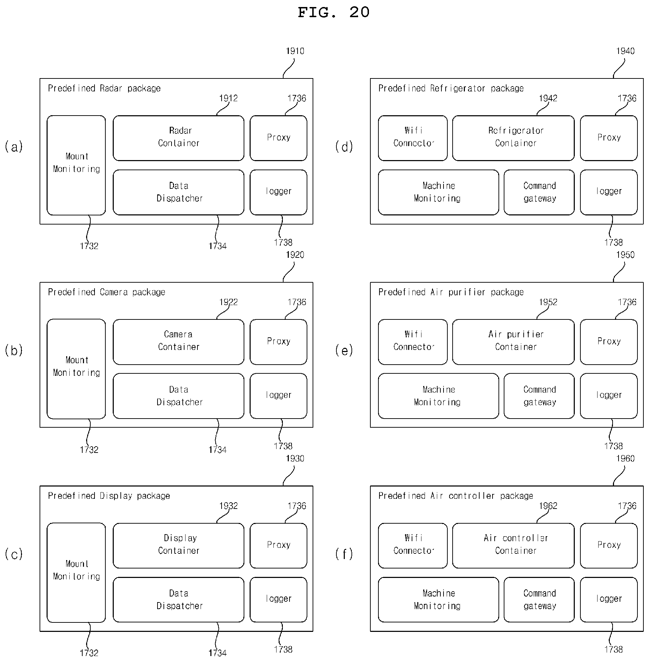

FIG. 20 is a diagram illustrating an example of downloading containers of various devices from a server.

Referring to FIG. 20, the processor 175 in the central signal processing device 170 can be configured to execute a container 1912 associated with radar which is a new device, or can be configured to transmit the container 1912 to the first zonal signal processing device 170Z1, as illustrated in (a) of FIG. 20.

The processor 175 in the central signal processing device 170 can be configured to execute a container 1922 associated with a camera which is a new device, or can be configured to transmit the container 1922 to the first zonal signal processing device 170Z1, as illustrated in (b) of FIG. 20.

The processor 175 in the central signal processing device 170 can be configured to execute a container 1932 associated with a display which is a new device, or can be configured to transmit the container 1932 to the first zonal signal processing device 170Z1, as illustrated in (c) of FIG. 20.

The processor 175 in the central signal processing device 170 can be configured to execute a container 1942 associated with a refrigerator which is a new device, or can be configured to transmit the container 1922 to the first zonal signal processing device 170Z1, as illustrated in (d) of FIG. 20.

The processor 175 in the central signal processing device 170 can be configured to execute a container 1952 associated with an air cleaner which is a new device, or can be configured to transmit the container 1952 to the first zonal signal processing device 170Z1, as illustrated in (e) of FIG. 20.

The processor 175 in the central signal processing device 170 can be configured to execute a container 1962 associated with an air conditioner which is a new device, or can be configured to transmit the container 1962 to the first zonal signal processing device 170Z1, as illustrated in (f) of FIG. 20.

Accordingly, the container or application associated with the new device can be stably executed or transmitted.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising a processor configured to execute an operating system,
wherein the processor is configured to execute Vehicle Signal Specification (VSS)-based middleware on the operating system, execute an application on the VSS-based middleware, and, based on a VSS-based message interface during communication with an adjacent second signal processing device, receive or transmit a message to a second VSS-based message interface in the second signal processing device.

2. The signal processing device of claim 1, wherein during communication with the second signal processing device configured to execute a different operating system from the signal processing device, the processor is configured to receive or transmit a message based on the VSS-based message interface.

3. The signal processing device of claim 1, wherein the processor is configured to execute an application for a display or an application for vehicle driving assistance on the VSS-based middleware.

4. The signal processing device of claim 1, wherein in response to a network error occurring between the signal processing device and the second signal processing device, the processor is configured to receive or transmit a message to the second signal processing device via an adjacent third signal processing device.

5. The signal processing device of claim 4, wherein in response to a network error occurring between the signal processing device and the second signal processing device, the processor is configured to receive or transmit a message to the second signal processing device via the third signal processing device based on the VSS-based message interface.

6. The signal processing device of claim 1, wherein the processor is configured to receive or transmit data between the VSS-based middleware and the application via a data distribution service (DDS) domain.

7. The signal processing device of claim 1, wherein the processor is configured transform data of an application, downloaded from an external server, and transmit the data to the VSS-based middleware or to the second signal processing device via the DDS domain.

8. The signal processing device of claim 1, wherein the processor is configured to transmit data, received from the second signal processing device, to the VSS-based middleware or to the external server or another signal processing device, via the DDS domain.

9. The signal processing device of claim 1, wherein the processor is configured to transform a CAN message, received from the second signal processing device, into a VSS-based message and transmit the transformed VSS-based message to a display.

10. The signal processing device of claim 1, wherein in response to a sensor setting being changed through a display, the processor is configured to transform received sensor setting change data into a VSS-based message, transform the transformed VSS-based message into a CAN message, and transmit the transformed CAN message to the second signal processing device.

11. The signal processing device of claim 1, wherein in response to data received from the external server not being mapped to the DDS domain, the processor is configured to operate after mapping the data by searching for a meaning of a vehicle signal of the received data.

12. The signal processing device of claim 1, wherein the processor is configured to receive vehicle function data provided based on a sample signal received from a new device in response to the new device being connected, and to execute a service based on the received vehicle function data or transmit the data to the adjacent second signal processing device.

13. The signal processing device of claim 11, wherein in response to a new device being connected or mounted, the processor is configured to receive location information, path information, manufacturer information, and code information of the new device, and to transmit the manufacturer information and the code information to the external server.

14. The signal processing device of claim 13, wherein the processor is configured to receive a container or application, corresponding to the new device, from the server, and to execute the container or the application or transmit the container or the application to the second signal processing device.

15. The signal processing device of claim 1, wherein in response to a network connection being established with a new device, the processor is configured to receive network information, manufacturer information, and code information of the new device, and to transmit the manufacturer information and the code information to the external server.

16. A signal processing device comprising a processor configured to execute an operating system,
wherein the processor is configured to execute VSS-based middleware on the operating system and execute an application on the VSS-based middleware, transform data of an application, downloaded from an external server, and transmit the data to the VSS-based middleware or to an adjacent second signal processing device via a DDS domain.

17. The signal processing device of claim 16, wherein the processor is configured to transmit data, received from the second signal processing device, to the VSS-based middleware or to the external server or another signal processing device, via the DDS domain.

18. The signal processing device of claim 16, wherein the processor is configured to transform a CAN message, received from the second signal processing device, into a VSS-based message and transmit the transformed VSS-based message to a display.

19. A vehicle display apparatus comprising:
at least one display; and
a signal processing device configured to output an image signal to the display,
wherein the signal processing device comprises the signal processing device of any one of claims 1 to 18.
